(19) **Europäisches Patentamt**
**European Patent Office**
**Office européen des brevets**

(11) **EP 1 750 090 A2**

(12) **EUROPEAN PATENT APPLICATION**

(43) Date of publication:
**07.02.2007 Bulletin 2007/06**

(51) Int Cl.:
***G01C 11/06*** *(2006.01)*

(21) Application number: **06016003.3**

(22) Date of filing: **01.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.08.2005 JP 2005223490**
**02.08.2005 JP 2005224771**
**30.09.2005 JP 2005289334**

(71) Applicant: **TOPCON CORPORATION**
**Tokyo 174-8580 (JP)**

(72) Inventors:
• **Kochi, Nobuo, c/o Topcon Corporation**
**Tokyo 174-8580 (JP)**
• **Moriyama, Takuya, c/o Topcon Corporation**
**Tokyo 174-8580 (JP)**
• **Hideshima, Masayuki, c/o Topcon Corporation**
**Tokyo 174-8580 (JP)**
• **Yamada, Mitsuharu, c/o Topcon Corporation**
**Tokyo 174-8580 (JP)**

(74) Representative: **HOFFMANN EITLE**
**Patent- und Rechtsanwälte**
**Arabellastrasse 4**
**81925 München (DE)**

(54) **Three-dimensional measurement system and method of the same, and color-coded mark**

(57) This invention provides a three-dimensional measurement system that improves the efficiency of and enables the automation of non-contact three-dimensional measurement over a wide range using a coded target. A measuring object 1 is photographed in stereo such that the resulting images include four coded marks CT each having a position detection pattern P1 and a code pattern P3. A series of images are photographed in stereo such that adjacent images share two coded marks CT. The position detection pattern P1 and the code pattern P3 are extracted from a pair of photographed images. A point corresponding to a reference point is searched for using the identification codes of the coded marks CT. A stereo matching area is determined. All the processes including photographing, extraction, orientation and three-dimensional measurement can be fully automated.

*FIG. 2*

**Description**

Technical Field

This invention relates to a three-dimensional measurement system and method of the same, and a color-coded mark. More specifically, the invention relates to a three-dimensional measurement system and method for three-dimensionally measuring, connecting and integrating areas to automatically measure a wide area, and to a color-coded mark for use in three-dimensional measurement or survey, including a position detection pattern for indicating a measurement position, and a color code pattern for allowing identification of the mark.

Background Art

In conventional non-contact three-dimensional measurement, a relatively large-sized apparatus called "non-contact three-dimensional measurement machine" incorporating a light pattern projector and a CCD camera is used to measure small areas, targets affixed to each small area are measured by a photogrammetric technique, and the small areas are integrated based on the coordinate points of the targets into a wide area. In the case where only images from a digital camera are used for three-dimensional measurement, for example, a stereo pair is set, orientation of two or more images is determined, and a measurement position is set manually or semi-automatically.

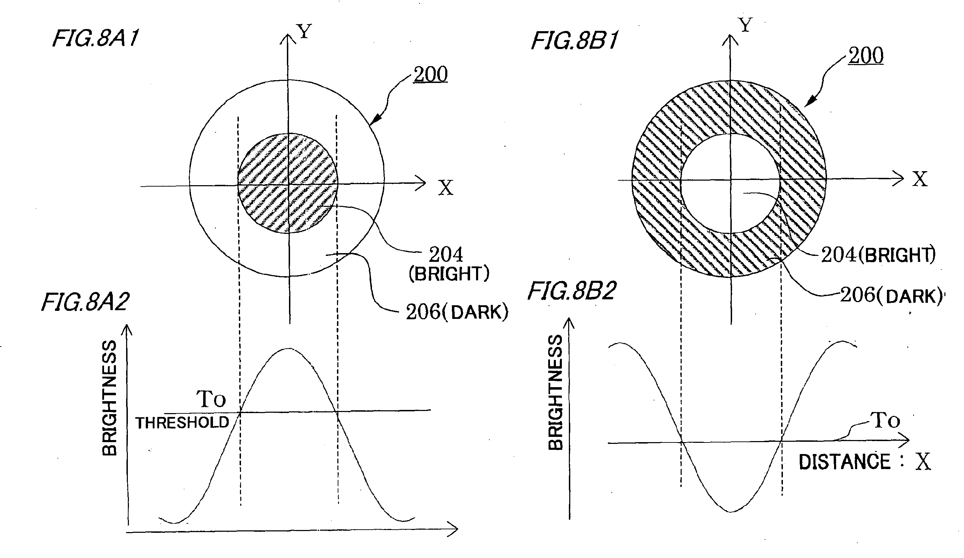

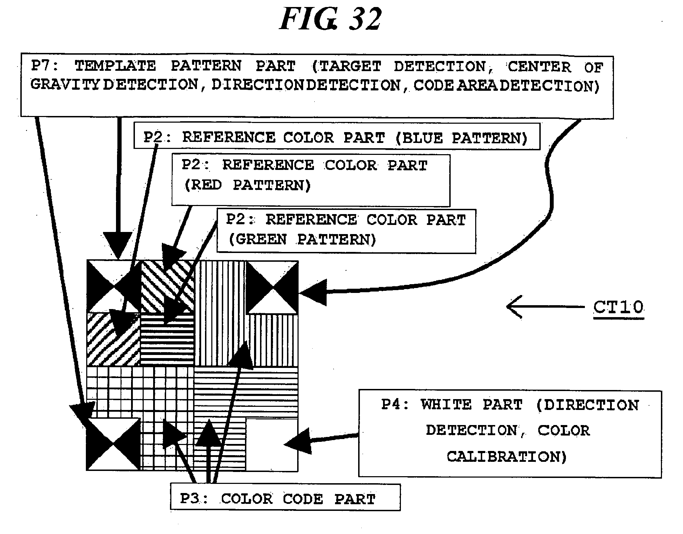

The term "target" refers to a mark to be affixed to a measuring object so that the position and the shape of the measuring object is determined with high accuracy. As the targets, retro targets (see FIG. 8), templates (denoted by reference symbol P7 in FIG. 32), etc. are used.

Disclosure of Invention

[Problem to be Solved by the Invention]

To measure a wide area, a large-sized non-contact three-dimensional measurement machine is used to measure a large number of small areas, and a photogrammetric technique is used to photograph targets affixed to each small area for image connection with a camera,to measure the target points three-dimensionally with high accuracy, and to integrate the camera coordinate system and the three-dimensional coordinate systems (such as global coordinate systems) of the targets in each area measured by the three-dimensional measurement machine into an entire wide area.

However, this technique is complicated since separate measurement devices are required to measure the small areas and the wide area, and cannot be automated through the entire three-dimensional measurement. In particular, in the case of integrating a large number of small areas over an extended area with high accuracy, the reduced measurement range of each area results in a huge number of measurement areas, which in turn results in complicated and inefficient work. For example, a mere measurement of a side surface of a car requires 100 or more small areas, or cuts. Thus, even if each operation is simple, the entire operation is ineffective, spending time and efforts.

In addition, conventional marks are difficult to discriminate from each other since they adopt an identical pattern, and it is not easy to determine corresponding points in a stereo image and corresponding points between different images. Therefore, it is difficult to fully automate the processes from photographing to three-dimensional measurement. To correct colors in images, marks for correction purposes other than the targets need to be prepared.

This invention has an object to improve the efficiency of and enable the automation of non-contact three-dimensional measurement over a wide range with one system.
In addition, this invention has another object to allow identification of marks for use in three-dimensional measurement, and facilitate determination of corresponding points in a stereo image and corresponding points between different images. This invention has still another object to thereby contribute to the automation of the processes from photographing to three-dimensional measurement. This invention has yet another object to allow correction of colors in images using the marks themselves.

[Means for Solving the Problem]

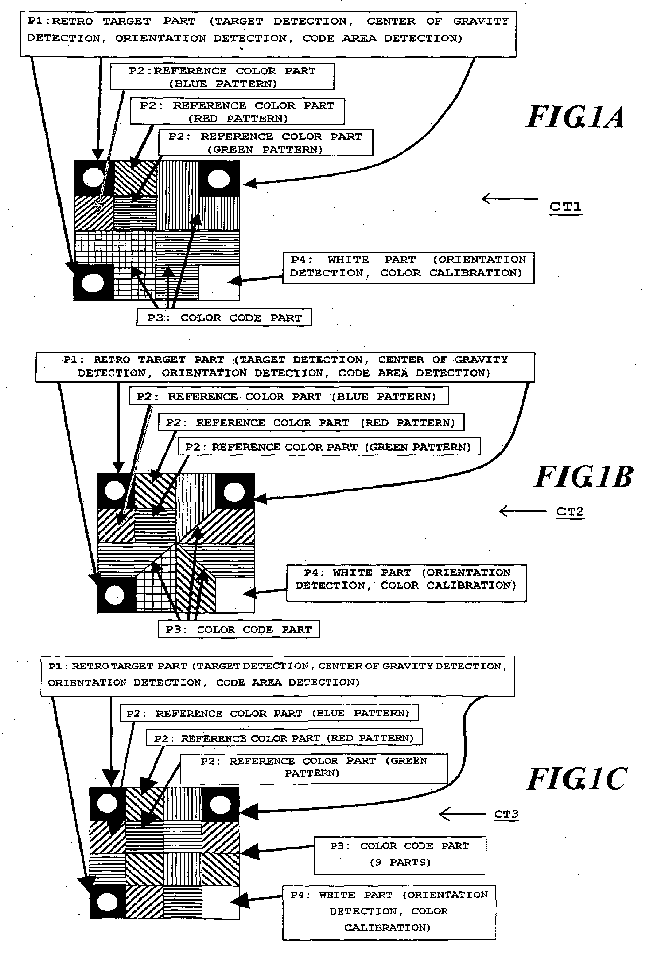

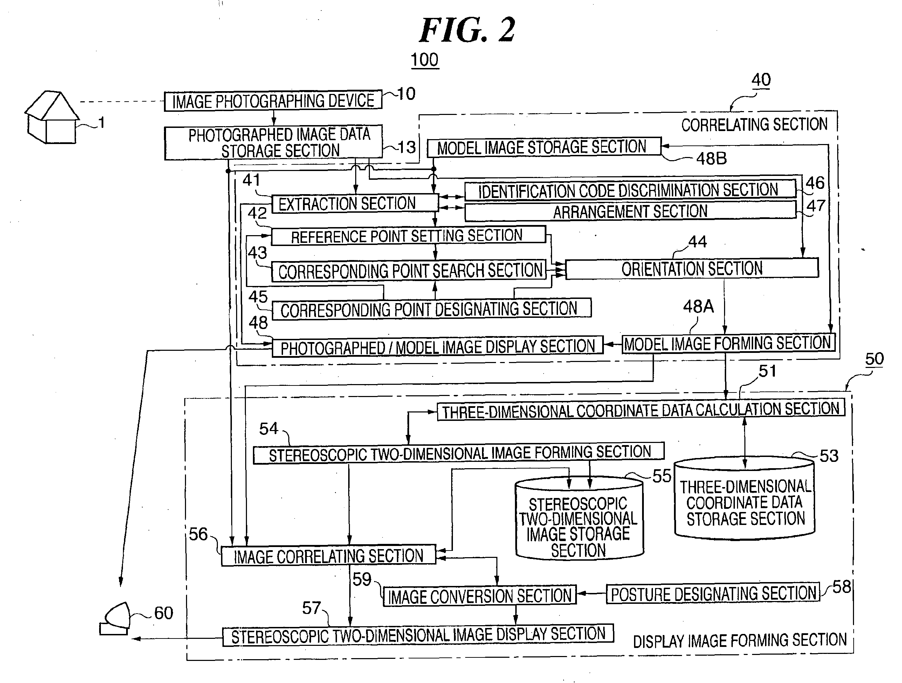

In order to achieve the above object, a three-dimensional measurement system 100 according to this invention comprises, as shown in FIG. 2 for example (for coded marks, refer to FIG. 1), an image data storage section 13 for storing a pair of photographed images of a measuring object 1 photographed from two directions such that the resulting images include a coded mark CT having in a surface thereof a position detection pattern P1 for indicating a measurement position and a code pattern P3 for allowing identification of the mark; an extraction section 41 for extracting the position detection pattern P1 and the code pattern P3 of the coded mark CT from the pair of photographed images; an identification code discrimination section 46 for discriminating an identification code of the coded mark CT based on the code pattern P3 of the coded mark CT extracted by the extraction section 41; a reference point setting section 42 for setting a reference point of the coded mark CT based on the position detection pattern P1 of the coded mark CT extracted by the extraction section 41 on one of the pair of photographed images; a corresponding point search section 43 for searching the other of the pair of photographed images for a point corresponding to the reference point using the identification code discriminated by the identification code discrimination section 46 based on the position detection pattern P1 of the coded mark CT extracted by the extraction section 41; and an orientation section 44 for performing an orientation process on the pair of photographed images based on the reference point and the corresponding point.

Here, codes of the code pattern may include color codes, barcodes, and arrangements of characters, numbers and symbols identifiable by computers. Photographing the measuring object from two directions includes photographing it with stereo cameras, and photographing it to obtain single photographs taken from slightly distanced positions, such that the two resulting images mostly overlap with each other and allow distance measurement. The photographed image data storage section, the extraction section, etc., may be a photographed image data storage device, an extraction device, etc., physically independent of each other, and the photographed image data storage section may be provided in a physically remote storage device. With such a constitution, it is possible to improve the efficiency of and enable the automation of non-contact three-dimensional measurement with one system, using the position detection pattern P1 and the code pattern P3 of the coded mark CT.

In the three-dimensional measurement system 100 according to this invention, the code pattern P3 may be, as shown in FIG. 1 for example, a color code pattern having plural colors, and the coded mark CT may be a color-coded mark.

Here, the color code pattern may include a coded pattern with an arrangement of colored unit patterns, and a coded pattern with a combination of colored retro targets. With such a constitution, the mark can be given a large number of identification numbers, and the patterns can be discriminated as identical or not at a glance.

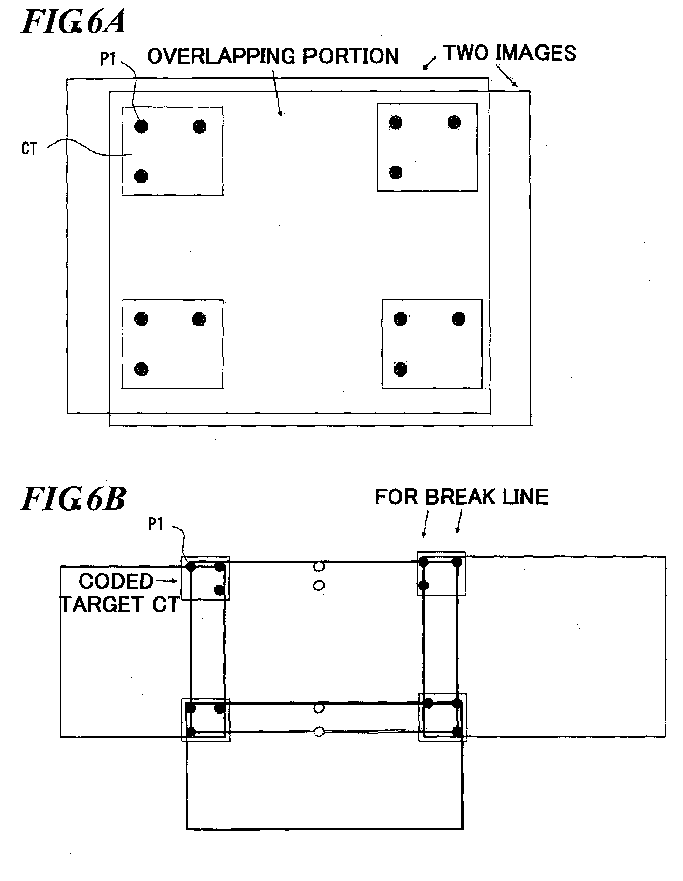

The three-dimensional measurement system 100 according to this invention, may further comprise, as shown in FIG. 6 for example, an arrangement section 47 for determining, on a series of photographed images photographed by an image photographing device 10 such that each photographed image includes at least three coded marks CT and adjacent photographed images share at least two coded marks CT, an arrangement of the series of photographed images such that the identification codes of the coded marks CT shared by the adjacent photographed images coincide with each other.

Here, the phrase "at least three" coded marks suggests that triangular images with coded marks arranged at their corners can be overlapped to allow measurement over a wide area. Photographing such that the resulting images include four coded marks is convenient to obtain a series of rectangular images covering a wide range, and thus preferable. The phrase "such that the identification codes coincide with each other" suggests that the patterns not only after but also before the assignment of numbers are coincident with each other (a different expression from the phrase "the code numbers coincide with each other"). Typically, a photographed image (including a series of photographed images) is treated as a pair, even where not specifically mentioned as "a pair of". The same applies to a model image to be described later. With such a constitution, the arrangement of the images can be easily found out using coded-marks with an identical identification code as markers.

In the three-dimensional measurement system 100 according to this invention, the orientation section 44 may perform sequential orientations on the series of photographed images of the measuring object 1 such that coordinates of the reference points or the corresponding points of the coded marks CT shared by the adjacent photographed images coincide with each other.

With such a constitution, epipolar lines can be made horizontal and at the same height between the stereo images, thus facilitating orientation.

In the three-dimensional measurement system 100 according to this invention may further comprise a mark information storage section 150 for storing a position coordinate of the extracted position detection pattern P1 of the coded mark CT and the identification code discriminated by the identification code discrimination section 46 in association with each other.

With such a constitution, a three-dimensional measurement system that can discriminate codes of coded marks CT can be provided.

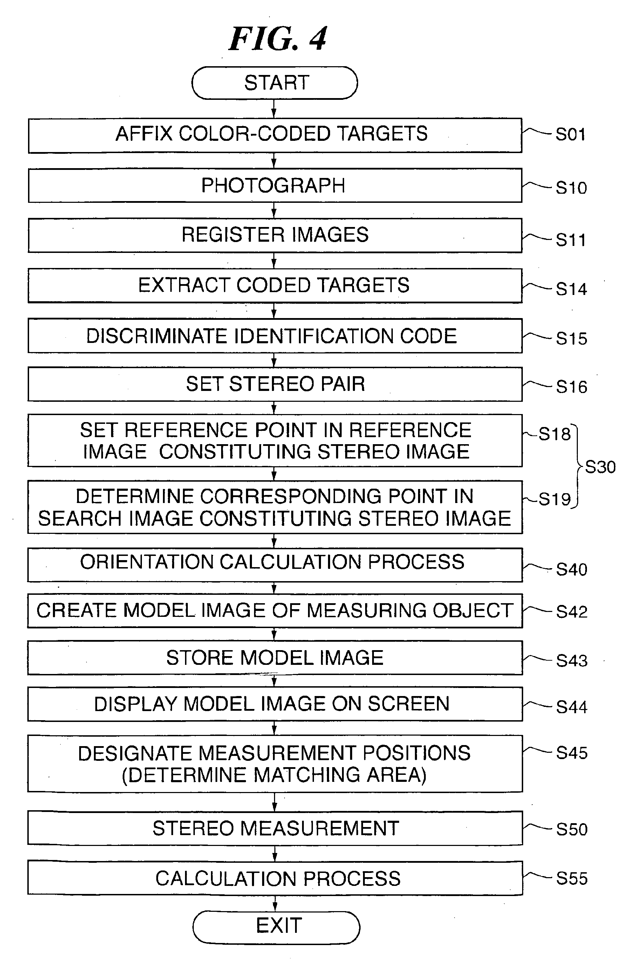

A three-dimensional measurement method according to this invention comprises the steps of, as shown in FIG. 4 example (for system structure, refer to FIG. 2, and for coded mark, refer to FIG. 1), photographing (S10) a measuring object 1 from two directions such that resulting images include a coded mark CT having in a surface thereof a position detection pattern P1 for indicating a measurement position and a code pattern P3 for allowing identification of the mark; storing (S20) a pair of images of the measuring object 1 photographed in the photographing step (S10); extracting (S14) the position detection pattern P1 and the code pattern P3 of the coded mark CT from the pair of photographed images; discriminating (S15) an identification code of the coded mark CT based on the code pattern P3 of the coded mark CT extracted in the extracting step (S14) ; setting (S18) a reference point of the coded mark CT based on the position detection pattern P1 of the coded mark CT extracted in the extracting step (S14) on one of the pair of photographed images; searching (S19) the other of the pair of photographed images for a point corresponding to the reference point using the identification code discriminated in the discriminating step (S15) based on the position detection pattern P1 of the coded mark CT extracted in the extracting step (S14); and performing an orientation step (S40) on the pair of photographed images based on the reference point and the corresponding point. At this point, the steps of setting a reference point (S18) and seaching for a point corresponding to the reference point (S19) correspond to an orientation work step (S30).

With such a constitution, it is possible to improve the efficiency of and enable the automation of non-contact three-dimensional measurement over a wide range using the position detection pattern P1 and the code pattern P3 of the coded mark CT.

In the three-dimensional measurement method according to this invention, the coded mark CT may be a color-coded mark, and the code pattern P3 may be a color code pattern having plural colors.

With such a constitution, the mark can be given a large number of identification numbers, and the patterns can be discriminated as identical or not at a glance.

A color-coded mark according to this invention comprises in a surface thereof ,as shown in FIG. 1 for example, a position detection pattern P1 for indicating a measurement position, and a color code pattern P3 having plural colors for allowing identification of the mark CT (including CT1 to CT12) and located in a predetermined position relative to the position detection pattern P1.

Here, the color code pattern P3 may have unit patterns of various shapes, and may include combination patterns of codes such as barcodes and colors. With such a constitution, the use of color codes allows easy at-a-glance identification of marks, and facilitates determination of corresponding points in a stereo image and corresponding points between different images.

This can promote the automation of the processes from photographing to three-dimensional measurement. This also allows allocation of an identification number to a large number of small areas.

In the color-coded mark according to this invenion may further comprise in a surface thereof, as shown in FIG. 1 for example, a reference color pattern P2 having plural colors to be used as color references.

With such a constitution, colors in images and marks can be corrected based on the reference color pattern P2, thus facilitating discrimination between color codes.

In the color-coded mark according to this invention, the position detection pattern P1 may be located at three corners of a quadrangle.

With such a constitution, it is easy to extract marks and detect the direction (tilt direction) of the marks. Such a construction is beneficial in setting orientation areas and stereo matching areas, connecting adjacent images, and automating these processes.

[Effect of the Invention]

This invention can improve the efficiency of and enable the automation of non-contact three-dimensional measurement over a wide range with one system.

In addition, this invention allows identification of marks for use in three-dimensional measurement, and facilitates determination of corresponding points in a stereo image and corresponding points between different images. This invention can thereby contribute to the full automation of the processes from photographing to three-dimensional measurement.

Brief Description of Drawings

FIGs. 1A, 1B and 1C (FIG. 1) show examples of color-coded target.

FIG. 2 is a block diagram illustrating an example of the general structure of a three-dimensional measurement system in a first embodiment.

FIG. 3 shows an example of the structure of a color code extraction means including an extraction section and an identification code discrimination section.

FIG. 4 is an exemplary process flowchart of the three-dimensional measurement system in the first embodiment.

FIGs. 5A and 5B (FIG. 5) show an example of overlap photographing.

FIGs. 6A and 6B (FIG. 6) show an example of images photographed by stereo cameras.

FIG. 7 is an exemplary flowchart of the extraction of color-coded targets.

FIGs. 8A1, 8A2, 8B1 and 8B2 (FIG. 8) are diagrams for explaining the detection of the center of gravity using a retro target.

FIG. 9 is an exemplary flowchart of the process by a color-coded target area / direction detection processing section.

FIG. 10 is an exemplary flowchart (continuation) of the process by a color-coded target area / direction detection processing section.

FIGs. 11A and 11B are drawings (part 1) for explaining how codes are read using retro targets.

FIGs. 12A, 12B and 12C (FIG. 12) are drawings (part 2) for explaining how codes are read using retro targets.

FIG. 13 is an exemplary flowchart of the selection of a stereo pair.

FIG. 14 shows an example of photographing order in the case where the number of identified colors in a color-coded target is small.

FIGs. 15A and 15B (FIG. 15) are an exemplary flowchart for explaining a corresponding point determination process.

FIG. 16 is a diagram for explaining a model image coordinate system XYZ and camera coordinate systems xyz in a stereo image.

FIG. 17 is an exemplary flowchart of the automatic correlation using reference points.

FIGs. 18A and 18B (FIG. 18) show an example of target having reference points.

FIG. 19 shows an example of search range and template image in left and right images.

FIG. 20 is an exemplary flowchart of the process of automatic determination of a stereo matching area.

FIGs. 21A and 21B (FIG. 21) are diagrams for explaining how a stereo matching area is set.

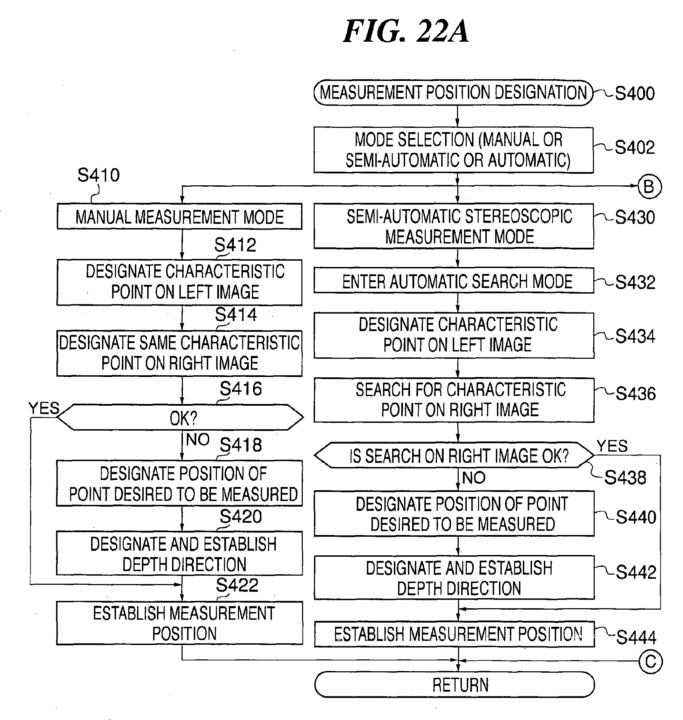

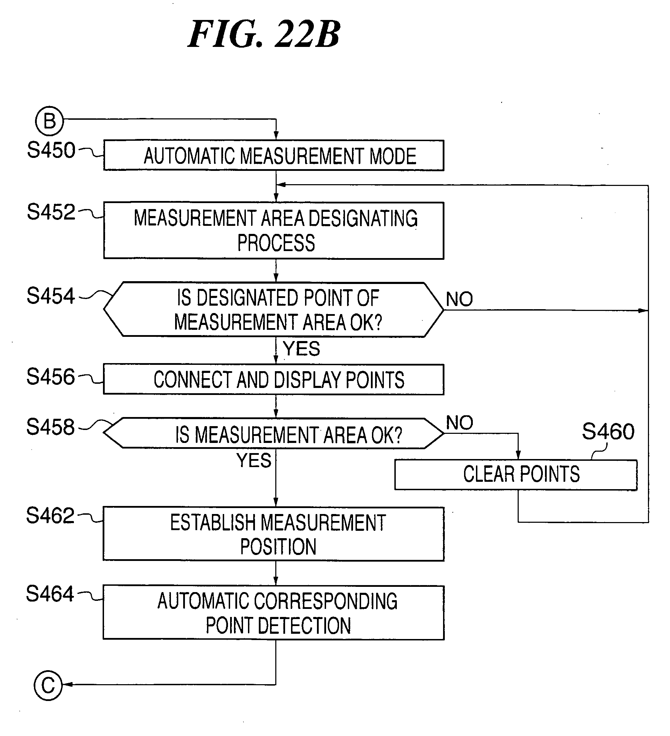

FIGs . 22A and 22B (FIG. 22) are an exemplary flowchart for explaining a measurement position designating process.

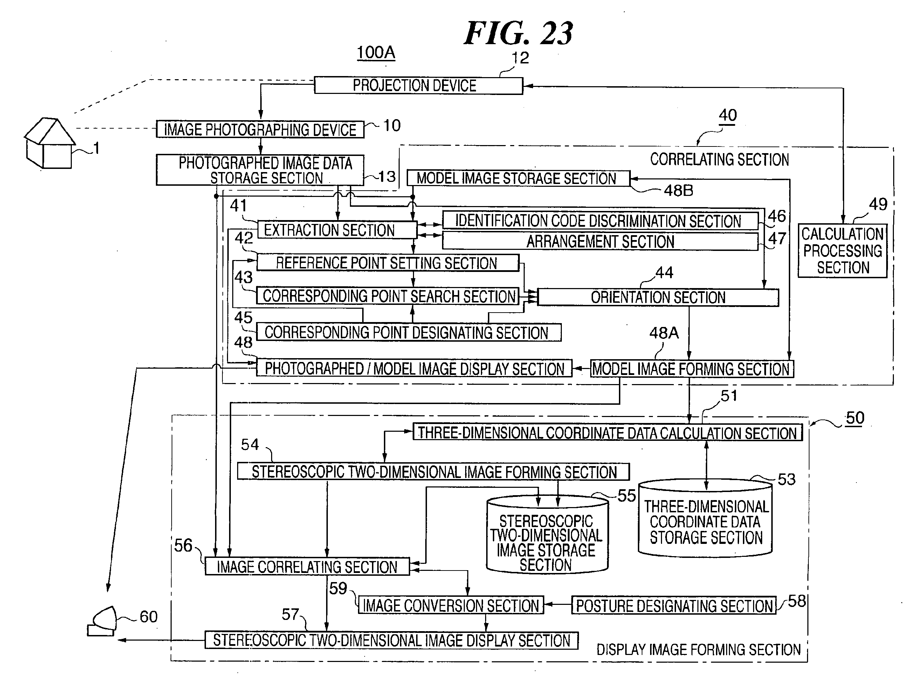

FIG. 23 is a block diagram illustrating an example of the general structure of a three-dimensional measurement system in a second embodiment.

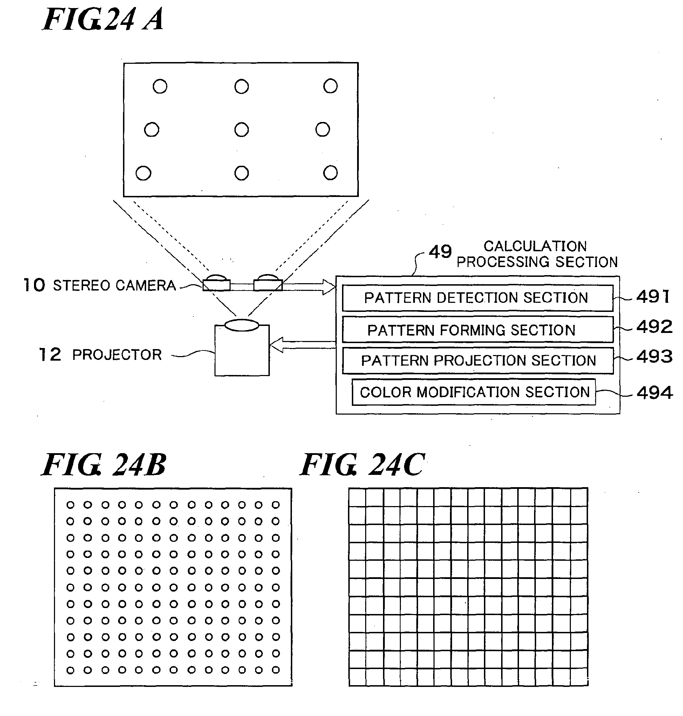

FIGs. 24A, 24B and 24C show an example of reference pattern projected on a photographing object.

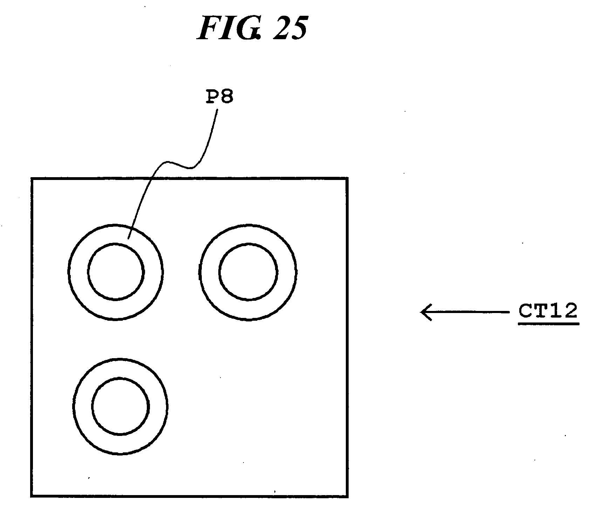

FIG. 25 shows an example of color-coded target with a combination of plural color retro targets.

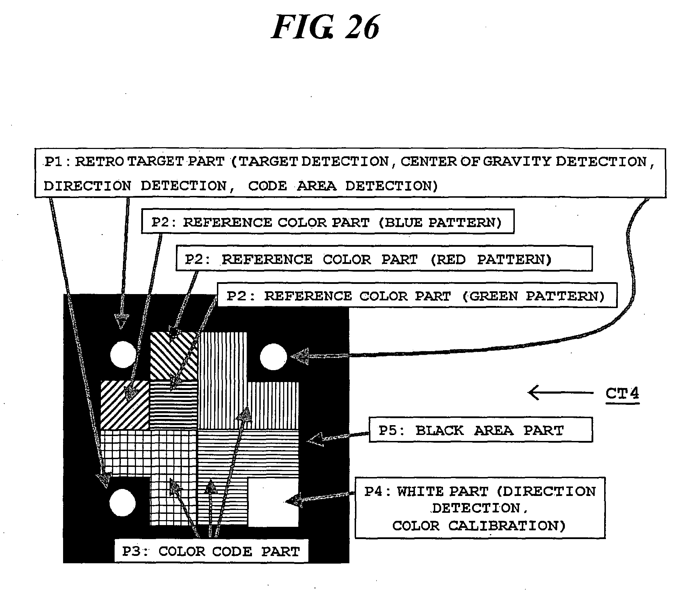

FIG. 26 shows an example of color-coded target.

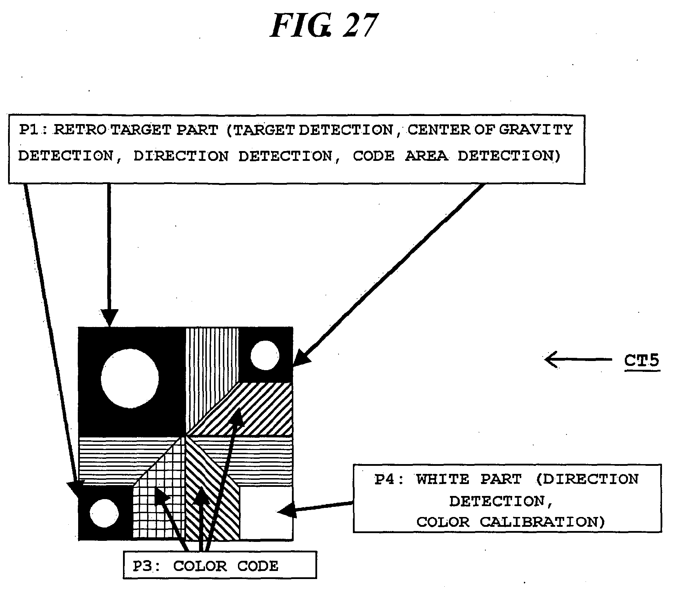

FIG. 27 shows an example of color-coded target.

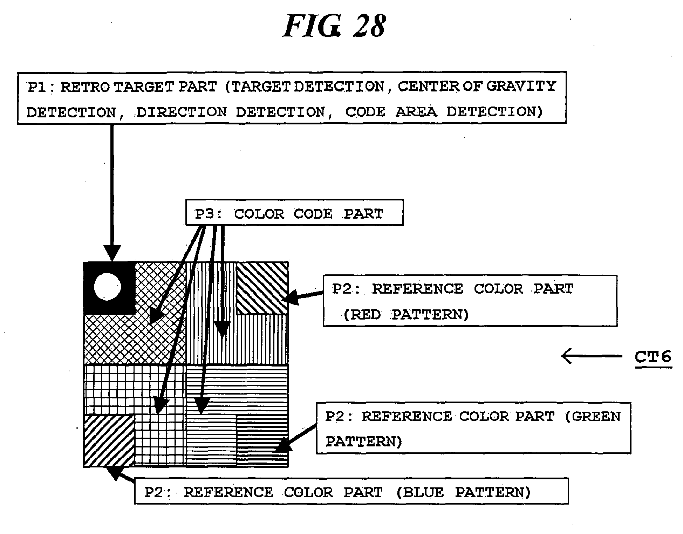

FIG. 28 shows an example of color-coded target.

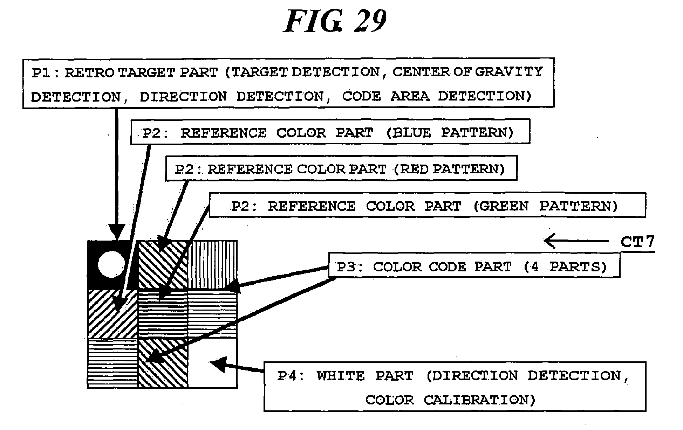

FIG. 29 shows an example of color-coded target.

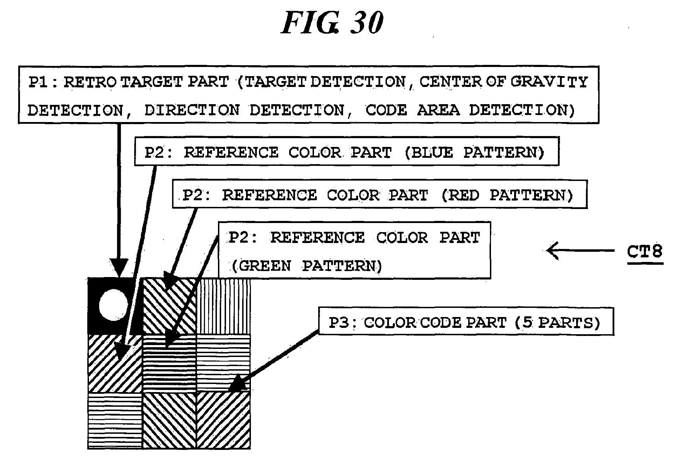

FIG. 30 shows an example of color-coded target.

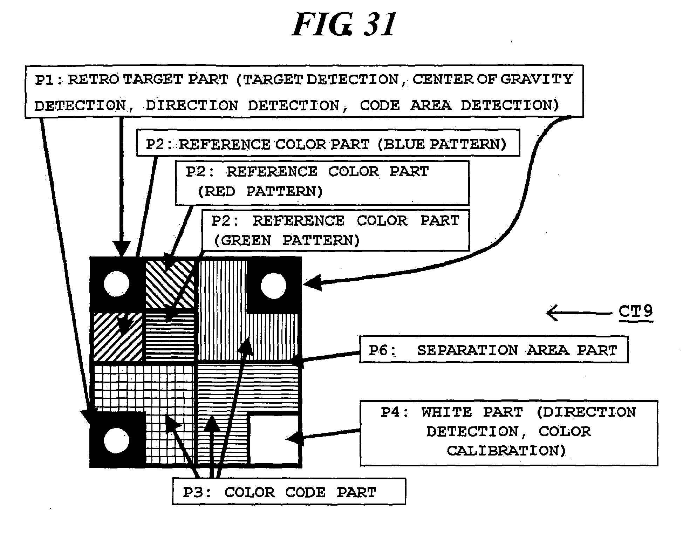

FIG. 31 shows an example of color-coded target.

FIG. 32 shows an example of color-coded target.

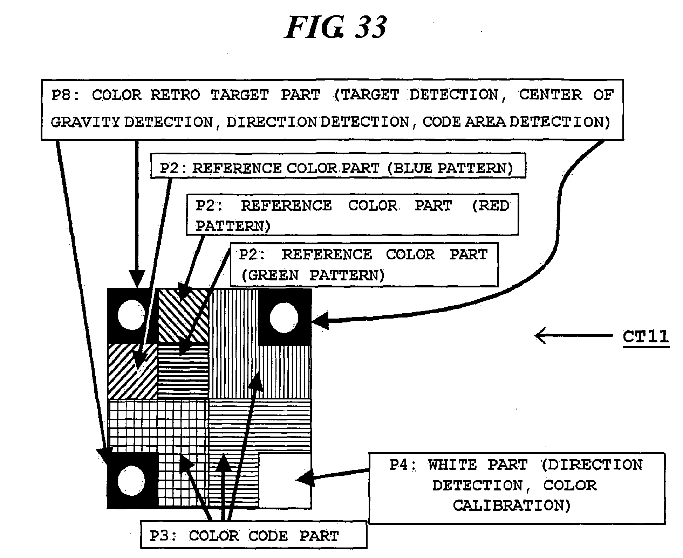

FIG. 33 shows an example of color-coded target.

Best Mode for Carrying Out the Invention

The basic Japanese Patent Applications No. 2005-223490 filed on August 1, 2005, No. 2005-224771 filed on August 2, 2005 and No. 2005-289334 filed on September 30, 2005 are hereby incorporated in their entirety by reference into the present application.

This invention will become more fully understood from the detailed description given hereinbelow. The other applicable fields will become apparent with reference to the detailed description given hereinbelow. However, the detailed description and the specific embodiment are illustrated of desired embodiments of this invention and are described only for the purpose of explanation. Various changes and modifications will be apparent to those ordinary skilled in the art on the basis of the detailed description.

The applicant has no intention to give to public any disclosed embodiments. Among the disclosed changes and modifications, those which may not literally fall within the scope of the present claims constitute, therefore, a part of this invention in the sense of doctrine of equivalents.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

[First Embodiment]

This invention relates to improving the efficiency of and automating non-contact three-dimensional measurement by using a coded mark (target).

An embodiment of this invention is hereinafter described with reference to the drawings.

First, a description is made of a color-coded mark (target) as an example of coded target.

[Color-coded target]

FIG. 1 shows examples of color-coded target. FIG. 1A shows a color-coded target with three color code unit areas, FIG. 1B with six color code unit areas, and FIG. 1C with nine color code unit areas. The color-coded targets CT (CT1 to CT3) of FIG. 1A to 1C includes a position detection pattern (retro target part) P1, a reference color pattern (reference color part) P2, a color code pattern (color code part) P3, and an empty pattern (white part) P4.

The retro target part P1 is used for detecting the target itself, the center of gravity thereof, the orientation of the target, and the target area. In the color-coded target shown in FIG. 1, a retro target is used as the position detection pattern P1.

The reference color part P2 is used as a reference for relative comparison to deal with color deviation due to photographing conditions such as of lighting and camera, or used for color calibration to compensate color deviation. In addition, the reference color part P2 can also be used for color correction of a color-coded target CT created in a simple way. For example, in the case of using a color-coded target CT printed by a color printer (inkjet, laser or dye-sublimation printer, etc.) that is not color managed, individual variations occur in color depending on the printer that is used. However, the influence of such individual variations can be suppressed by relatively comparing the reference color part P2 and the color code part P3 and correcting the color.

The color code part P3 expresses a code using a combination of colors distributed to respective unit areas. The number of codes that can be expressed changes with the number of code colors that can be used for codes. For example, in the case where the number of code colors is "n", the color-coded target CT1 of FIG. 1A can express n × n × n kinds of codes, because there are three unit areas of the color code part P3. Even under the condition that the unit areas do not use duplicate colors to increase reliability, n × (n-1) × (n-2) kinds of codes can be expressed. When the number of code colors is increased, the number of codes can be accordingly increased. In addition, given the condition that the number of unit areas of the color code part P3 is equal to the number of color codes, all the code colors are used for the color code part P3. Therefore, an identification code can be determined while checking the colors of each unit area not only by comparison with the reference color part P2 but also by relative comparison between the respective unit areas of the color code part P3, to thereby increase reliability. Further, with an additional condition that each unit area has the same size, the unit areas can also be used to detect the color-coded target CT from an image. This is made possible by the fact that even color-coded targets CT with different identification codes have areas of respective colors of the same size and hence generally similar dispersion values can be obtained from light detected from the entire color code part. Also, since boundaries between the unit areas where a clear difference in color can be detected come at regular intervals, the target CT can be detected from an image also from such a repeated pattern of detection light.

The white part P4 is used for the detection of the orientation of the color-coded target CT and calibration of color deviation. Out of the four corners of the target CT, only one corner does not have a retro target, and that corner can be used for the detection of the orientation of the target CT. That corner, or the white part P4, only needs to have a pattern different from the retro target. Thus, the white part may have printed therein a character string such as number for allowing visual confirmation of a code, or may be used as a code area for containing a barcode, etc. The white part may also be used as a template pattern for template matching to further increase detection accuracy.

[System structure]

FIG. 2 is a block diagram illustrating an example of the general structure of a three-dimensional measurement system in a first embodiment.

A three-dimensional measurement system 100 includes an image photographing device 10, a photographed image data storage section 13, a correlating section 40, a display image forming section 50, and a display device 60. The photographed image data storage section 13, the correlating section 40, and the display image forming section 50 may be implemented by, for example, a computer. A measuring object 1 is a tangible substance such as working object or manufacturing object, and may be, for example, a work of various kinds such as architecture or factory, a person, a landscape, etc.

The image photographing device 10 obtains an image (which is typically a stereo image, but may be a pair of single photographic images) of the measuring object 1. The image photographing device 10 may be, for example, combined equipment of a photogrammetric stereo camera or a general-purpose digital camera and a device for compensating for lens aberrations in an image of the measuring object 1 photographed by such cameras. The photographed image data storage section 13 stores an image of the measuring object 1. It stores, for example, single photographic images and stereo images of the measuring object 1 photographed by the image photographing device 10.

The correlating section 40 correlates a pair of photographed images or model images of the measuring object 1 to perform orientation or matching. In the case of using a stereo image of the measuring object 1, an orientation process is performed after a coded mark is extracted, a reference point is set, and a corresponding point is searched. The correlating section 40 also performs stereo matching for three-dimensional measurement. The correlating section 40 includes an extraction section 41, a reference point setting section 42, a corresponding point search section 43, an orientation section 44, a corresponding point designating section 45, an identification code discrimination section 46, an arrangement section 47, a photographed / model image display section 48, a model image forming section 48A, and a model image storage section 48B.

[Color code extraction means]

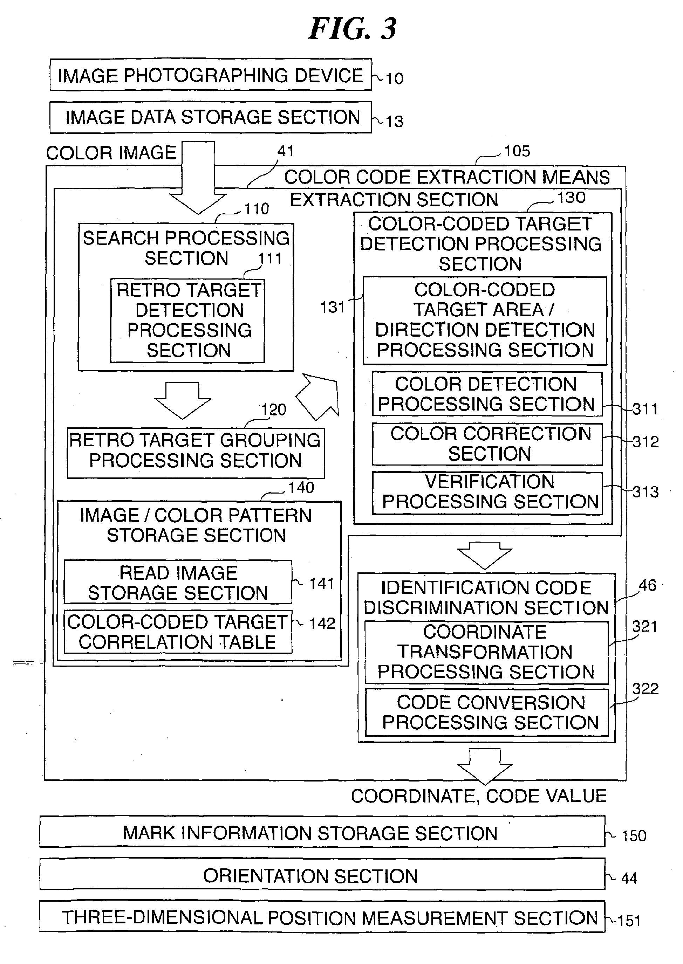

FIG. 3 shows an example of the structure of a color code extraction means. A color code extraction means 105 includes an extraction section 41 for extracting a color-coded target, and an identification code discrimination section 46 for discriminating a color code of the color-coded target. The extraction section 41 includes a search processing section 110, a retro target grouping processing section 120, a color-coded target detection processing section 130, and an image / color pattern storage section 140. The identification code discrimination section 46 discriminates a color code detected by the color-coded target detection processing section 130 to assign a code number.

The image photographing device (photographing section) 10 photographs a measuring object including a color-coded target. A stereo camera, for example, may be used as the image photographing device 10. The image data storage section 13 stores a stereo image photographed by the image photographing device 10. A mark information storage section 150 stores the position coordinate of a position detection pattern P1 of a color-coded mark CT extracted by the extraction section 41 and an identification code discriminated by the identification code discrimination section 46 in association with each other. The data stored in the mark information storage section 150 is used by the orientation section 44 to perform orientation, or used by a three-dimensional position measurement section 151 or a three-dimensional coordinate data calculation section 51 (see FIG. 2) to measure the three-dimensional coordinate or three-dimensional shape of the measuring object.

The search processing section 110 detects a position detection pattern P1 such as retro target pattern from a color image (photographed image or model image) read from the photographed image data storage section 13 or the model image storage section 48B. In the case where a template pattern is used as the position detection target instead of a retro target pattern, the template pattern is detected.

The retro target grouping processing section 120 groups those retro targets detected by the search processing section 110 into the same group when the retro targets are belonging to the same color-coded target CT (for example, those with position coordinates falling within the area of the same color-coded target CT).

The color-coded target detection processing section 130 includes a color-coded target area / direction detection processing section 131 for detecting the area and the direction of a color-coded target CT based on a group of retro targets determined as belonging to the same color-coded target, a color detection processing section 311 for detecting the color arrangement in the reference color part P2 and the color code part P3 of a color-coded target and detecting the color of the measuring object 1 in an image, a color correction section 312 for correcting the color of the color code part P3 and the measuring object 1 in an image with reference to the reference color pattern P2, and a verification processing section 313 for verifying whether or not the grouping has been performed properly.

The image / color pattern storage section 140 includes a read image storage section 141 for storing an image read by the extraction section 41, and a color-coded target correlation table 142 for storing a type-specific code number indicating the type of color-coded target CT for plural types of color-coded target CT expected to be used, and information on correlation between the pattern arrangement and the code number for each type of color-coded target CT.

The identification code discrimination section 46 discriminates an identification code based on the color arrangement in the color code part P3 for conversion into an identification code. The identification code discrimination section 46 includes a coordinate transformation processing section 321 for transforming the coordinate of a color-coded target CT based on the area and the direction of the color-coded target CT detected by the color-coded target detection processing section 130, and a code conversion processing section 322 for discriminating an identification code from the color arrangement in the color code part P3 of the coordinate-transformed color-coded target CT for conversion into an identification code.

Turning to FIG. 2, on a series of images photographed by the image photographing device 10 such that each photographed image includes at least three coded marks CT and adjacent photographed images share at least two coded marks CT, the arrangement section 47 determines the arrangement of the series of photographed images such that the identification codes of coded marks CT shared by adjacent photographed images coincide with each other. In addition, the arrangement section 47 determines the arrangement of a series of model images of the measuring object 1 such that the identification codes of coded marks CT shared by adjacent model images coincide with each other.

The reference point setting section 42 searches the vicinity of a designated point on one image (reference image) constituting a stereo image for a point corresponding to a characteristic point, and sets the point corresponding to the characteristic point as a reference point. The characteristic point may be, for example, the center, the center of gravity, and corners of the measuring object 1, a mark (target) affixed to or projected on the measuring object 1, etc. On the other image (search image) constituting the stereo image, the corresponding point search section 43 determines a corresponding point that corresponds to the reference point set by the reference point setting section 42. When an operator designates a point in the vicinity of a characteristic point, the characteristic point intended by the operator can be snapped at by means of the reference point setting section 42 without the operator exactly designating the characteristic point, and a corresponding point in the search image can be determined by the corresponding point search section 43.

The orientation section 44 finds relationship of corresponding points in a pair of images such as a stereo image to perform an orientation calculation process, based on the photographed position and tilt with respect to the pair of images , using the reference point set by the reference point setting section 42 and the corresponding point determined by the corresponding point search section 43. The corresponding point designating section 45 determines a corresponding point on the search image in the case where the operator designates a point outside the vicinity of a characteristic point on the reference image. The operator can easily recognize the correlation of characteristic points of the measuring object 1 by contrasting the designated point on the reference image displayed on the display device 60 and the corresponding point on the search image determined by the corresponding point designating section 45. The orientation section 44 also performs relative orientation using positional correspondence determined by the corresponding point designating section 45.

The model image forming section 48A forms a model image based on the parameters (the position and the tilt of the camera used in the photographing) obtained through the orientation calculation process by the orientation section 44. The model image, also "rectified image", refers to a pair of photographed left and right images with their corresponding points (hereinafter, the term "corresponding points" also refers to corresponding points in left and right images, in addition to a single point corresponding to a reference point) rearranged on an identical epipolar line so as to be viewed stereoscopically. The model image storage section 48B stores the model image of the measuring object 1 formed by the model image forming section 48A. The photographed / model image display section 48 displays on the display device 60 the photographed image, or the model image formed by the model image forming section 48A, as a pair of images in the extraction, reference point setting, corresponding point search, and stereo matching processes, etc., performed by the correlating section 40.

The display image forming section 50 creates a stereoscopic two-dimensional image of the measuring object 1 viewed from an arbitrary direction based on the three-dimensional coordinate data on the measuring object 1 and the photographed image, or the model image, of the measuring object 1. The display image forming section 50 includes a three-dimensional coordinate data calculation section 51, a three-dimensional coordinate data storage section 53, a stereoscopic two-dimensional image forming section 54, a stereoscopic two-dimensional image storage section 55, an image correlating section 56, a stereoscopic two-dimensional image display section 57, a posture designating section 58, and an image conversion section 59.

The three-dimensional coordinate data calculation section 51 obtains three-dimensional coordinate data on the corresponding points of the measuring object 1 based on the relationship of corresponding points found by the orientation section 44. The three-dimensional coordinate data storage section 53 stores the three-dimensional coordinate data on the corresponding points of the measuring object 1 calculated by the three-dimensional coordinate data calculation section 51. The three-dimensional coordinate data storage section 53 may store three-dimensional coordinate data on the measuring object 1 measured separately by a three-dimensional position measurement device (not shown) beforehand, and such three-dimensional coordinate data stored in the three-dimensional coordinate data storage section 53 may be read for use in the orientation process.

The stereoscopic two-dimensional image forming section 54 forms a stereoscopic two-dimensional image of the measuring object 1 based on the three-dimensional coordinate data on the corresponding points. The stereoscopic two-dimensional image is a stereoscopic representation of the shape of the measuring object 1 created based on the three-dimensional coordinates so as to obtain, for example, a perspective image viewed from an arbitrary direction. The stereoscopic two-dimensional image storage section 55 stores the stereoscopic two-dimensional image of the measuring object 1 formed by the stereoscopic two-dimensional image forming section 54. The image correlating section 56 correlates the photographed image stored in the photographed image data storage section 13, or the model image stored in the model image storage section 48B, and the stereoscopic two-dimensional image formed by the stereoscopic two-dimensional image forming section 54 using the three-dimensional coordinate data, using the relationship of corresponding points found by the orientation section 44. The stereoscopic two-dimensional image display section 57 displays on the display device 60 a stereoscopic two-dimensional image of the measuring object 1 correlated by the image correlating section 56, for example using an image with stereoscopic texture such as bird's-eye view image.

The posture designating section 58 designates the posture of the stereoscopic two-dimensional image (the direction in which the stereoscopic two-dimensional image is viewed) of the measuring object 1. For example, the operator operates a cursor input device such as a mouse to designate the posture of the measuring object 1 for display on the display device 60. The image conversion section 59 converts the coordinates of the corresponding points according to the posture designated to the stereoscopic two-dimensional image. The stereoscopic two-dimensional image display section 57 displays a stereoscopic image of the measuring object 1 in accordance with the posture designated by the posture designating section 58. The display device 60 may be an image display device such as a liquid crystal display, a CRT, or the like.

[System operation]

FIG. 4 is an exemplary flowchart for explaining the operation of the three-dimensional measurement system.

First, a coded target is affixed to a photographing object 1 (S01). The coded target is affixed where measurement will be performed. In this embodiment, a color-coded target CT is used as the coded target. Then, an image (typically, a stereo image) of the measuring object 1 is photographed using the image photographing device 10 such as a digital camera (S10), and the photographed image is registered in the photographed image data storage section 13 (S11).

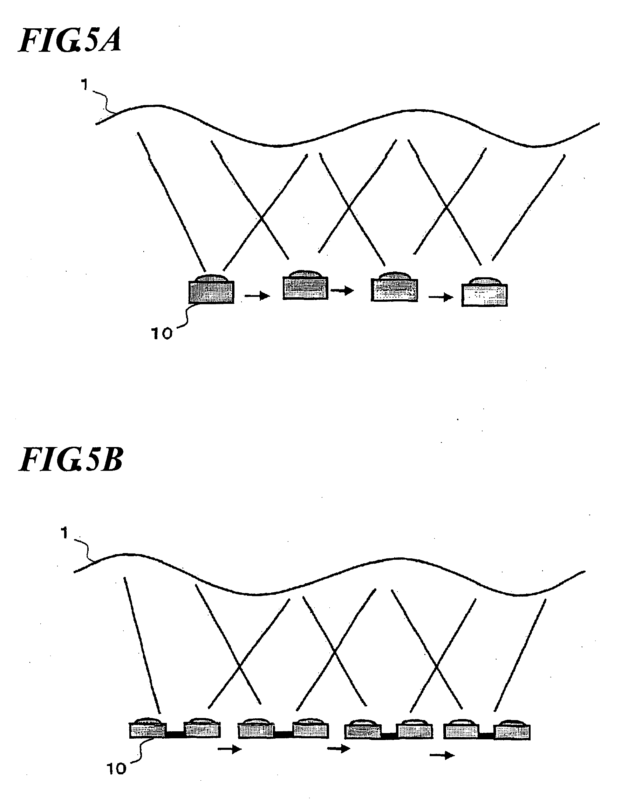

FIG. 5 shows an example of overlap photographing. One, two or more cameras 10 are used to photograph the measurement object 1 in an overlapping manner (S10). There is no particular restriction on the number of photographing devices 10. That is, one, plural, or any number of photographing devices 10 may be used. FIG. 5B shows a basic configuration in which a pair of cameras perform stereo photographing to obtain a series of stereo images partially overlapping with each other for use in three-dimensional measurement. Alternatively, a single camera may be used for overlap-photographing from plural directions as shown in FIG. 5A, or more than two cameras may be used for overlap-photographing. Two images overlapping with each other form a pair, in which case, for example, an image may form a pair with an image on its left and also form another pair with an image on its right.

FIG. 6 shows an example of images photographed by left and right stereo cameras. FIG. 6A shows how images overlap with each other to form a stereo image. The basic range of measurement is the overlapping range of two (a pair of) images photographed in stereo. At this time, it is preferable that four coded targets CT are included in the overlapping range. In this way, three-dimensional measurement is possible using the stereo image. FIG. 6B shows an example of how adjacent stereo images overlap with each other. It is preferable to obtain a series of images overlapping with each other such that an image has two coded targets CT on any of its upper, lower, left and right sides in common with another image. In this way, automation of non-contact three-dimensional measurement over a wide range is made possible. Break lines are lines indicating the effective area of an image. The inner area of the lines connecting the outermost retro targets in the four color-coded targets CT is the effective area.

Then, the correlating section 40 loads the photographed image registered in the photographed image data storage section 13, or the model image stored in the model image storage section 48B, into the image / color pattern storage section 140 of the extraction section 41. Coded targets CT are extracted from the photographed image by the extraction section 41 (S14). The identification codes of the extracted targets CT are discriminated by the identification code discrimination section 46 (S15), and the arrangement of the images (photographed images) is determined using the identification codes. Then, pairs of left and right images are set as stereo pairs (S16), and an orientation work is performed (S30). The orientation work step (S30) includes the steps of setting a reference point (S18) and seaching for a point corresponding to the reference point(S19).

[Detection of position detection target]

The extraction process by the extraction section 41 (S14) may be performed manually or automatically. When performed automatically, the process may be performed differently depending on the number of colors identified in the color-coded targets CT or the photographing method. First of all, a description is made of the case where the number of colors identified in the color-coded targets CT is large. In this case, there is no restriction on the order of photographing, allowing fully automatic processing.

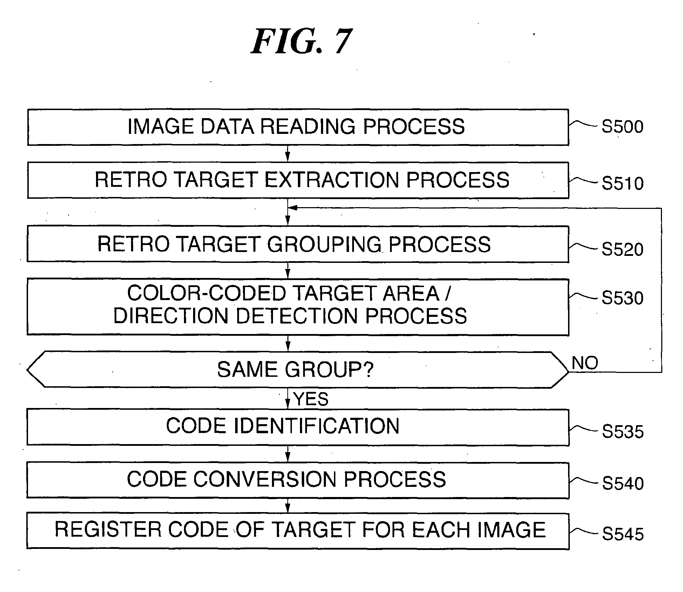

FIG. 7 is an exemplary flowchart of the extraction of color-coded targets (S14). First, color images to be processed (photographed image or model image) are read into the read image storage section 141 of the extraction section 41 from the image photographing device 10 or the image data storage section 13 (S500). Then, color-coded targets CT are detected from each read image (S510).

Various search methods may be used such as (1) to search for a position detection pattern (retro target) P1 in a color-coded target CT, (2) to detect color dispersion of the color-coded part P3, (3) the combination of (1) and (2), and (4) to use a colored position detection pattern.

Here, the methods (1), (2) and (3) are described. The method (4) will be described in relation to a third embodiment.

(1) In the case where the color-coded target CT includes a retro target, a pattern with a clear difference in brightness is used. Therefore, the retro target can be easily detected by photographing the object with a camera with a small aperture and a flash to obtain an image in which only the retro target is gleaming, and binarizing the obtained image.

FIG. 8 is a diagram for explaining the detection of the center of gravity using a retro target. FIG. 8A1 shows a retro target 200 with a bright inner circular portion 204 and a dark outer circular portion 206, FIG. 8A2 shows the brightness distribution in a diametrical direction of the retro target 200 of FIG. 8A1, FIG. 8B1 shows a retro target 200 with a dark inner circular portion 204 and a bright outer circular portion 206, and FIG. 8B2 shows the brightness distribution in a diametrical direction of the retro target 200 of FIG. 8B1. In the case where a retro target 200 with a bright inner circular portion 204 as shown in FIG. 8A1 is used, its center of gravity reflects a large amount of light and thus looks bright in a photographed image of the measuring object 1. Therefore, the light distribution in the image is as shown in FIG. 8A2, allowing the inner circular portion 204 and the center of the retro target 200 to be found based on a light distribution threshold To.

When the range where the target lies is settled, its center of gravity is calculated by, for example, the method of moments. For example, the retro target 200 shown in FIG. 8A1 is assumed to be represented by plane coordinates (x, y). Then, calculations are performed for points in x and y directions at which the brightness of the retro target 200 is at the threshold To or more, using [Equation 1] and [Equation 2] (the symbol * represents a multiplication operator):

$$xg=\{\Sigma x*f(x,y)\}/\Sigma f(x,y) \quad ----[Equation\ 1]$$

$$yg=\{\Sigma y*f(x,y)\}/\Sigma f(x,y) \quad ----[Equation\ 2]$$

where (xg, yg) represents the coordinates of the center of gravity, and f(x, y) represents a density value at the coordinates (x, y).

In the case where a retro target 200 as shown in FIG. 8B1 is used, calculations are performed for points in x and y directions at which the brightness is at the threshold To or less, using [equation 1] and [Equation 2].

In this way, the center of gravity of the retro target 200 can be found.

(2) Normally, a color code pattern of a color-coded target CT uses a large number of code colors and has a large color dispersion value. Therefore, a color-coded target CT can be detected by finding a part with a large dispersion value from an image.

(3) In the case where a color-coded target CT includes a retro target, the entire image is scanned to first detect a part with a high brightness (where the retro target part P1 can exist), and to then find a part with a large color dispersion value (where the color code part P3 can exist) from the vicinity of the detected part with a high brightness, allowing efficient detection of the retro target.

Here, an example of the case (1) is described. Next, a retro target detection processing section 111 stores the coordinates of plural retro targets detected from a color image in the read image storage section 141.

Turning to FIG. 7, the description of the flowchart of the extraction of color-coded targets is continued. The retro target grouping processing section 120 detects candidates for a group of retro targets belonging to the same color-coded target CT based on the coordinates of the retro targets stored in the read image storage section 141 (for example, detects those located in the color-coded target CT in terms of the coordinates), and stores such a group in the read image storage section 141 (S520). Verification can be made, for example, by measuring the distances between the three retro targets detected in a color-coded target CT and the angles of a triangle formed by connecting the three retro targets (see S530).

In addition, the pattern of the detected color-coded target is compared with the color-coded target correlation table 142 to verify which type of color-coded target it is.

Next, the area / direction detection processing section 131 of the color-coded target detection processing section 130 finds the area and the direction of the color-coded target CT based on the centers of gravity of the retro targets stored in the read image storage section 141 in each group of retro targets (S530). Before or after the area and the direction are determined, the color detection processing section 311 detects the color of the reference color part P2, the color code part P3, and the measuring object 1 in the image. If necessary, the color correction section 312 corrects the color of the color code part P3 and the measuring object 1 in the image with reference to the color of the reference color part P2. In the case where a color-coded target printed in a non-reference color is used, its reference color part is also corrected. Then, the verification processing section 313 verifies whether or not the grouping has been performed properly, that is, whether or not the centers of gravity of the retro targets once grouped into the same group belong to the same color-coded target CT. If they are discriminated as belonging to the same group, the process proceeds to the next, identification code discrimination process (S535), and if not, the process returns to the grouping process (S520).

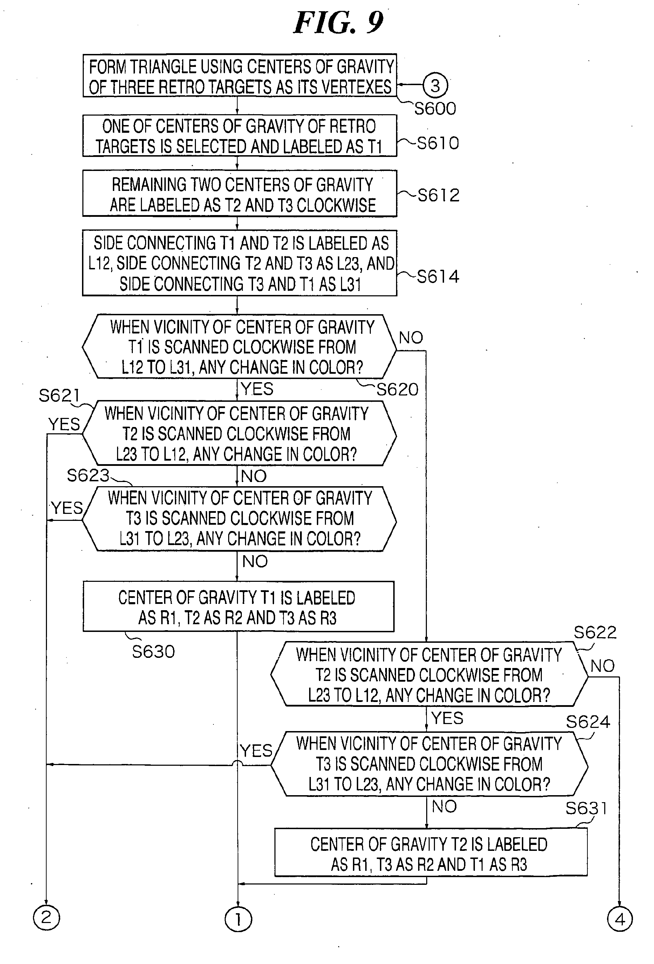

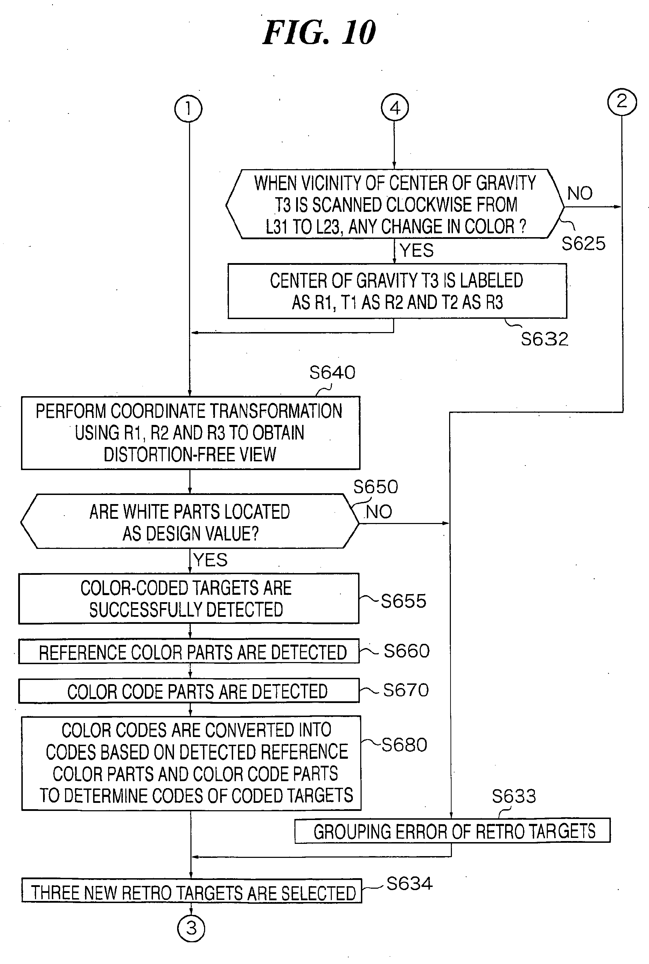

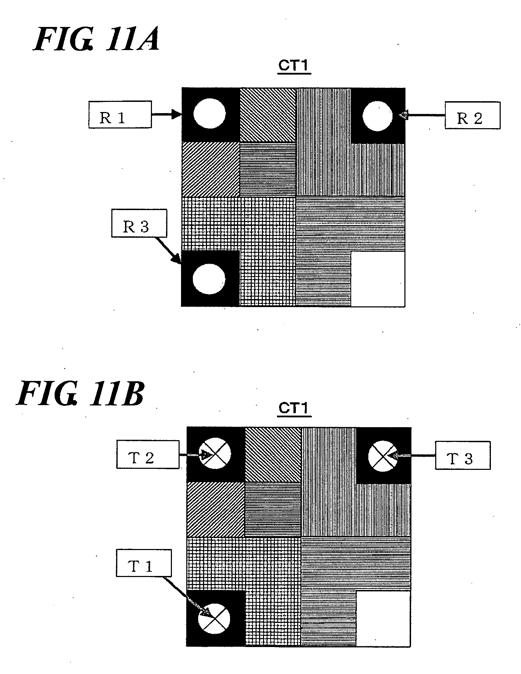

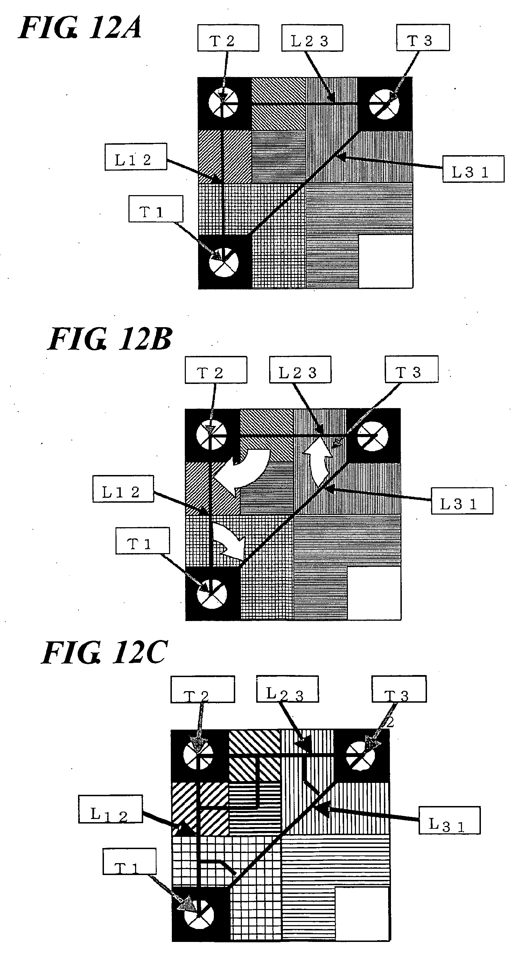

FIGs. 9 and 10 show an exemplary flowchart of the process by the color-coded target area / direction detection processing section 131. Also, with reference to FIGs. 11 and 12, an explanation is made of how codes are read using retro targets. Here, a description is made of a procedure for reading codes from the color-coded target CT1 of FIG. 1A. Since it is necessary to know the area and the direction of the color-coded target CT1 in order to read codes from the color-coded target CT1, the centers of gravity of the three position detection retro targets are labeled as R1, R2 and R3 (see FIG. 11A).

For labeling, first of all, a triangle is created using the centers of gravity R1 to R3 of the three retro targets as its vertexes (S600) . One of the centers of gravity R1 to R3 of the three retro targets is selected arbitrarily and labeled tentatively as T1 (S610), and the remaining two centers of gravity are labeled tentatively as T2 and T3 clockwise (S612; see FIG. 11B).

Then, the sides connecting the respective centers of gravity are labeled. The side connecting T1 and T2 is labeled as L12, the side connecting T2 and T3 is labeled as L23, and the side connecting T3 and T1 is labeled as L31 (S614; see FIG. 12A).

Then, the interior of the triangle is scanned in the manner of an arc to obtain the values of pixels distanced by a radius R from each corner (center of gravity) in order to see changes in color over the scanned range (see FIG. 12B). Scanning is performed clockwise from L12 to L31 on the center of gravity T1, clockwise from L23 to L12 on the center of gravity T2, and clockwise from L31 to L23 on the center of gravity T3 (S620 to S625).

The radius is determined by multiplying the size of the retro target on the image by a multiplication factor depending on the scanning angle. In the case where the retro target is photographed from an oblique direction and hence looks oval, the scanning range is also determined as oval. The multiplication factor is determined according to the size of the retro target and the distance between the center of gravity of the retro target and the reference color part P2.

To reduce influence of noise, etc., the scanning range may be made wider to obtain a representative value such as an average over the range of radiuses from R - $\Delta$r to R + $\Delta$r.

In the example described above, scanning is performed in the manner of an arc. However, scanning along the lines perpendicular to the sides of the triangle having the centers of gravity as its vertexes is also possible (see FIG. 12C).

Taking the color-coded target of FIG. 1A as an example, as a result of scanning the vicinity of the center of gravity T2 where there are changes in color, the values of R, G and B change with the peak of change appearing in the order of R, G and then B. As a result of scanning the vicinity of T1 and T3 where there are no changes in color, the values of R, G and B are generally constant and no peak appears (see FIG. 12B). In this way, the direction of the color-coded target CT1 can be determined from the fact that changes in color are seen in the vicinity of one center of gravity T2 but not in the vicinity of the remaining two centers of gravity T1 and T3.

The process of verifying the labeling is performed by the verification processing section 313. The center of gravity with changes in color as a result of scanning is labeled as R1, and the remaining two centers of gravity are labeled clockwise from the center of gravity with changes in color as R2 and R3 (S630 to S632). In this example, the center of gravity T2 is labeled as R1, the center of gravity T3 as R2, and the center of gravity T1 as R3. If one center of gravity with changes in color is detected and two centers of gravity with no changes in color are not detected, it is determined as a grouping error of retro targets (S633), three retro targets are selected again (S634), and the process returns to S600. As described above, it is possible to verify whether or not the three selected retro targets belong to the same color-coded target CT1 based on the process results. In this way, the grouping of retro targets is established.

The above labeling method is described taking the color-coded target CT1 of FIG. 1A as an example. However, a similar process can be performed on various types of color-coded target CT to be described later by modifying a part of the process.

[Code identification]

Turning to FIG. 7, in the identification code discrimination section 46, the coordinate transformation processing section 321 transforms the coordinates of the color-coded target CT1 extracted by the extraction section 41 based on the centers of gravity of the grouped retro targets so as to conform to the design values of the color-coded target CT1. Then, the code conversion processing section 322 identifies the color code and performs a code conversion to obtain the identification code of the color-coded target CT1 (S540). The identification code is stored in the read image storage section 141. This process flow is described with reference to FIG. 10.

A photographed image of the color-coded target distorted due to being affixed to a curved surface, photographed from an oblique direction, etc., is transformed through coordinates into a distortion-free front view using the labels R1, R2 and R3 (S640). The coordinate transformation makes it easier to discriminate the retro target part P1, the reference color part P2, the color code part P3 and the white part P4 with reference to the design values of the color-coded target, and facilitates subsequent processing.

Then, it is checked whether or not a white part P4 is located on the coordinate-transformed color-coded target CT1 as specified by the design values (S650). If not located as specified by the design values, it is determined as a detection error (5633). If a white part P4 is located as specified by the design values, it is determined that a color-coded target CT1 has been detected (S655).

Then, the color code of the color-corrected color-coded target CT1 with known area and direction is discriminated.

The color code part P3 expresses a code using a combination of colors distributed to respective unit areas. For example, in the case where the number of code colors is "n" and there are three unit areas, n $\times$ n $\times$ n codes can be expressed.

Under the condition that the unit areas do not use duplicate colors, n × (n-1) × (n-2) codes can be expressed. Under the condition that the number of code colors is "n", there are "n" unit areas and they do not use duplicate colors, n factorial kinds of codes can be expressed.

The code conversion processing section 322 of the identification code discrimination section 46 compares the combination of colors of the unit areas in the color code part P3 with the combination of colors in the color-coded target correlation table 142 to discriminate an identification code (S535 of FIG. 7).

There are two ways to discriminate colors: (1) relative comparison method by comparison between the colors of the reference color part P2 and the colors of the color code part P3, and (2) absolute comparison method by correcting the colors of the color-coded target CT1 using the colors of the reference color part P2 and the color of the white part P4, and discriminating the code of the color code part P3 based on the corrected colors. For example, in the case where the number of colors used in the color code part P3 is small, the reference colors are used as colors to be compared with for relative comparison, and in the case where the number of colors used in the color code part P3 is large, the reference colors are used as colors for calibration purposes to correct the colors, or as colors to be compared with for absolute comparison. As described before, the color detection processing section 311 performs color detection, and the color correction section 312 performs color correction. In three-dimensional measurement using images, plural images are photographed and color deviation due to photographing conditions, etc., occurs between the images in most cases. By using the color-coded targets, difference in color between plural images can be corrected.

The code conversion processing section 322 of the identification code discrimination section 46 detects the reference color part P2 and the color code part P3 using either color discrimination method (1) or (2) (S660, S670), discriminates the colors of the color code part P3 and converts them into a code to determine an identification code of the subject color-coded target CT1 (S680; S540 of FIG. 7).

The numbers of the color-coded targets CT1 included in images are registered for each image in the read image storage section 141 (S545 of FIG. 7). The data registered in the read image storage section 141 are returned to the photographed image data storage section 13 or the model image storage section 48B, or used by the orientation section 44 to perform orientation based on the coordinates of the detected positions of the plural color-coded marks CT, or used by the three-dimensional position measurement section 151 or the three-dimensional coordinate data calculation section 51 (see FIG. 2) to measure the three-dimensional coordinates or the three-dimensional shape of the measuring object.

[Setting stereo pair]

Turning to FIG. 4, the description of the operation of the three-dimensional measurement system 100 is resumed. Next, the process proceeds to the setting of a stereo pair. Of the images registered in the stereo image data storage section 13, a pair of left and right images are set as a stereo pair (S16).

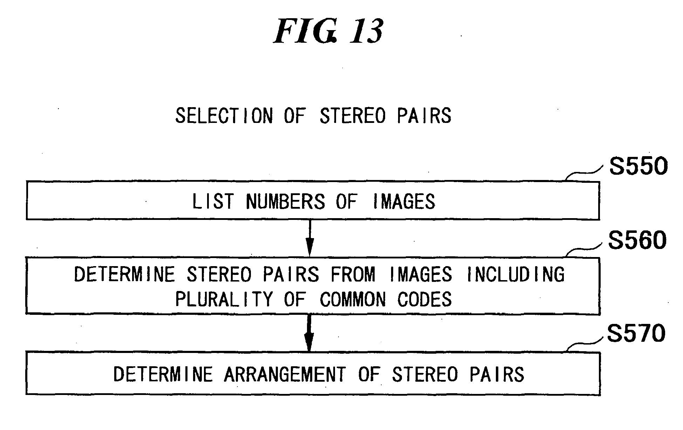

FIG. 13 is an exemplary flowchart of the selection of a stereo pair (S16). This flow of selection is automatically performed by the arrangement section 47. First, the numbers of the coded targets CT registered for each image are listed (S550) . Based on these numbers, a stereo pair of images are selected from those including plural targets CT with a common code number (S560). If the images are photographed in stereo so as to include four coded targets CT as shown in FIG. 6A, there aer images including four coded targets CT and such images can be set as stereo pairs. In the case where stereo pairs share two coded targets CT with a common code number as shown in FIG. 6B, the arrangement of the stereo pairs can be determined because the images are adjacent to each other vertically or horizontally (S570). In this way, on a series of images photographed by the image photographing device 10 such that each photographed image includes four coded marks CT and adjacent photographed images share two coded marks, the arrangement section 47 determines the arrangement of the series of photographed images such that the identification codes of coded marks CT shared by adjacent photographed images coincide with each other. The photographed images can be arranged only if each photographed image includes three or more coded marks CT and adjacent photographed images share two or more coded marks CT.

Next, a description is made of the setting of a stereo pair in the case where the number of colors identified in the color-coded targets is small.

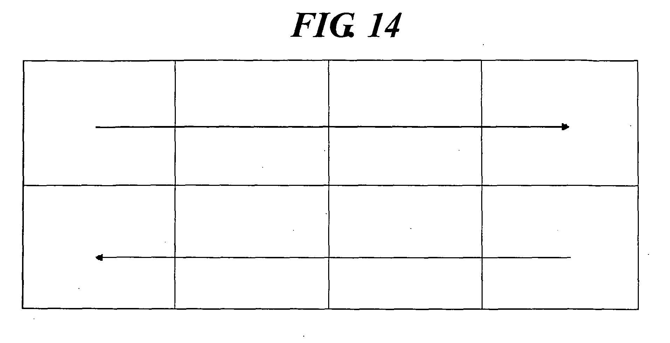

FIG. 14 shows an example of photographing order in the case where the number of identified colors is small. When the photographing order is fixed to obtain images, the arrangement of images and stereo pairs are known, allowing stereo pairs to be set automatically without the need to wait for extraction of targets. In this example, the arrows indicate the fixed photographing order.

In case the photographing order is not followed, images in the read image storage section 141 may be rearranged by the arrangement section 47 for subsequent automatic processing.

For manual setting, images may be read and displayed on the display device 60 in stereo, and a stereo pair may be set by comparison between the two images. Also in this case, images may preferably be read after fixing the order by the arrangement section 47 for improved work efficiency.

[Corresponding point determination process]

Turning now to FIG. 4, next, the reference point setting section 42 searches for a point appropriate as a characteristic point in the vicinity of a point designated on one image (reference image) constituting a stereo image, and sets the point appropriate as the characteristic point as a reference point (S18). The corresponding point search section 43 determines a point corresponding to the reference point on the other image (search image) constituting the stereo image (S19).

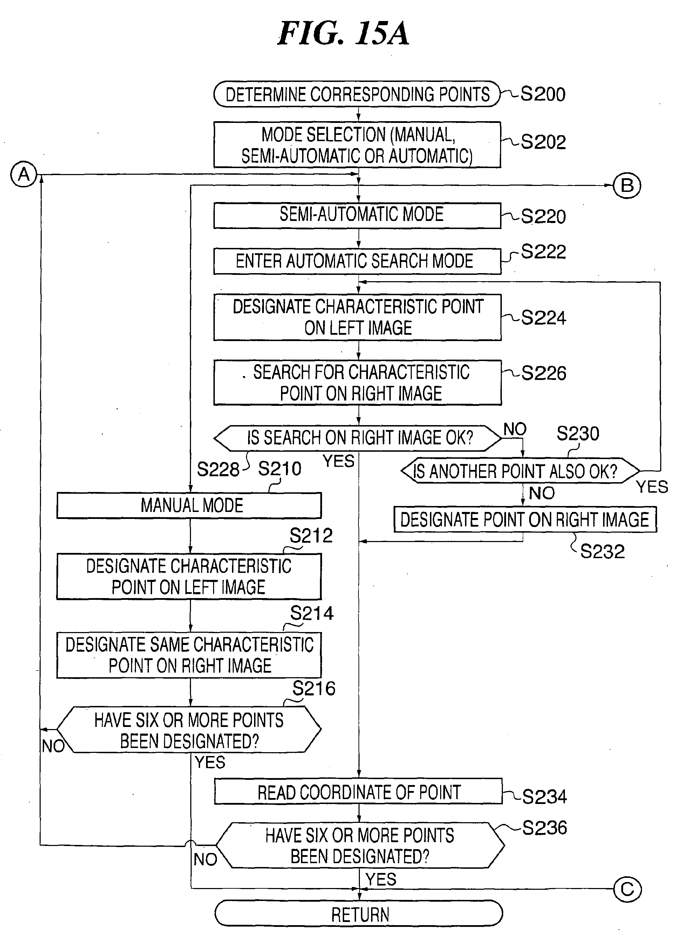

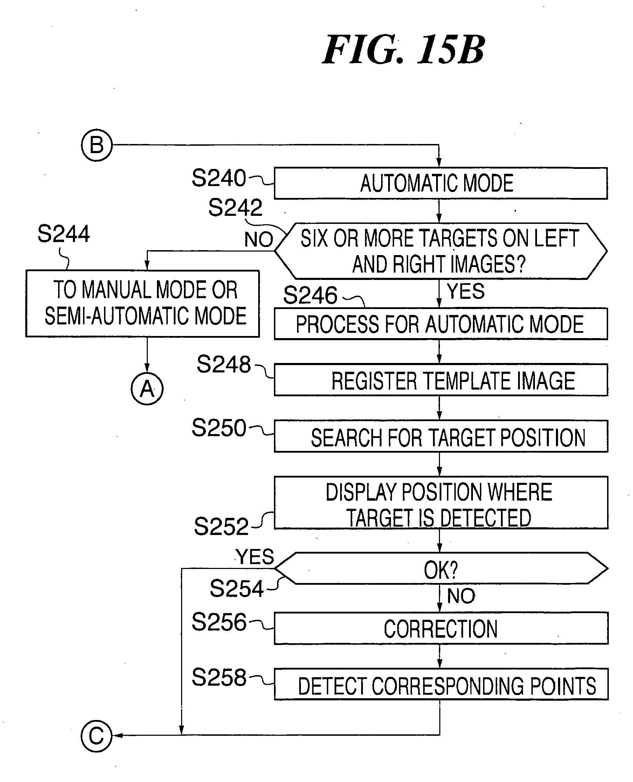

FIG. 15 is an exemplary flowchart for explaining the corresponding point determination process. With reference to FIG. 15, a description is made of a specific process to determine corresponding points in left and right images. When entering the corresponding point determination process (S200), one of the three modes of the corresponding point determination process, i.e. manual mode, semi-automatic mode and automatic mode, is selected (S202). In the following description, the left image and the right image may be interchanged with each other to derive exactly the same results.

When the manual mode is selected, the process for the manual mode is started (S210). First, a characteristic part on the left image on the display device is designated with a mouse of the corresponding point designating section 45, and decided (S212). The decision may be made, for example, by pressing a button of the mouse. When the decision is made, a coordinate on the left image is read. Then, the same characteristic point as that on the left image is designated on the right image on the display device with the mouse of the corresponding point designating section 45, and decided (S214). In this way, a coordinate on the right image is read. As described above, in the manual mode, designations and decisions are made separately on the left and right images by the corresponding point designating section 45. Then, it is determined whether six or more points have been correlated as corresponding points (S216). If still less than six points, the process returns to the point after the mode selection of S202 (S210). The program may be configured to return the process to S212 and continue the corresponding point determination process in the manual mode. If six or more points have been correlated, the process is returned.

When the semi-automatic mode is selected, the process for the semi-automatic mode is started (S220). In the semi-automatic mode, an automatic search mode by the corresponding point search section 43 is entered (S222). Then, a characteristic point (reference point, retro target, etc.) on the left image on the display device 60 is designated with the mouse of the corresponding point designating section 45 (S224). Then, the corresponding point search section 43 automatically searches for a corresponding point (retro target, etc.) on the right image (S226).

Then, the operator determines whether or not the corresponding point on the right image found by the corresponding point search section 43 is appropriate (S228). At this time, the determination is OK if a cross-correlation factor calculated by the corresponding point search section 43 is a certain threshold or more (for example, 0.7 or more). The operator makes a determination with reference to those displayed on the display device 60 by the corresponding point designating section 45. The displays include a green indication if the position of the found point on the right image corresponding to the point on the left image is OK or a red indication if NG, a changeable cursor mark (for example, the cursor mark is changed from an arrow to a double circle), or an indication of the cross-correlation factor by a cross-correlation method. The indication of whether or not the point found on the right image is OK may be of any type as long as the operator can easily make a determination.

If not OK, it is determined whether or not another point may be a corresponding point (S230). If another point may be a corresponding point, the process returns to S224 to designate another point. On the other hand, that point is absolutely desired to be a corresponding point, the cursor on the right image is manually moved for designation (S232). That is, by rotating a dial or the like of the corresponding point designating section 45 for example the cursor on the right image equivalently moves. Thus, by adjusting the dial, the cursor can be adjustably moved to the same point as the characteristic point on the left image.

If the point found on the right image is OK in S228, or when a designation is made on the right image in S232, the image coordinate of that point is read (S234). The decision may be made, for example, by pressing a button of the mouse. Then, it is determined whether six or more points have been correlated as corresponding points (S236). If still less than six points, the process returns to the point after the mode selection of S202 (S220). The program may be configured to return the process to S222 and continue the corresponding point determination process in the semi-automatic mode. If six or more points have been correlated, the process is returned.

In the above-described semi-automatic mode, a characteristic point is designated on the left image with a mouse, the right image is automatically searched for a corresponding point, and whether OK or not is displayed. The operator looks at the cursor mark, and if a corresponding point on the right image found by the corresponding point search section 43 is appropriate (for example, if the mark is changed from an arrow to a double circle), decides the found point as a corresponding point. When the semi-automatic mode is adopted, the operator needs only to make a designation on one of the images, facilitating the corresponding point determination process. While a designation with a mouse and decision for confirmation may be made by pressing a button, another configuration is also possible in which a corresponding point on the right image is always determined and displayed just by moving the mouse cursor on the left image. When a point on the right image corresponding to a mouse cursor position on the left image is always determined and displayed, the corresponding point determination process can be further facilitated.

When the automatic mode is selected, the process for the automatic mode is started (S240). In the automatic mode, by arranging targets which will serve as corresponding points around on the object beforehand, the targets are detected automatically. For the targets, those easily recognizable as characteristic points may be arranged around on the object. The targets may be of any kind as long as they are easily recognizable. In this embodiment, the retro target part P1 of the color-coded target CT is used. In this case, if the accurate positions of the targets are known beforehand, accurate three-dimensional measurement can be performed.

First, the operator checks on the display device 60 whether six or more targets are included in the left and right images (S242). If six or more targets are not included in the left and right images, the process shifts to the manual or semi-automatic mode (S244). In that case, where six or more targets corresponding to each other are not photographed in the left and right images, another photographing is performed to obtain images including six or more targets. Then, the process shifts to the automatic mode (S246).

To perform automatic target detection in the automatic mode, one image of the arranged targets is designated by the corresponding point designating section 45, and registered as a template image in the image / color pattern storage section 140 of the extraction section 41, for example (S248). Then, based on the template image, the reference point setting section 42 and the corresponding point search section 43 search for the target position both in the left image and in the right image (step S250). The target position can be automatically detected using, for example, a cross-correiation factor method described before. Then, the found target positions are displayed on the display device 60 (S252).

The operator determines whether or not the found target position is OK (S254), and if OK, the process is returned. If NG, the target position is corrected (S256) . In this correction, the manual mode or the semi-automatic mode is used. Even in case of NG, the correction is easy because the targets are arranged.

Then, using the corrected target position, corresponding points in the left and right images are detected (S258). This operation is performed by designating corresponding points in the left and right images with the corresponding point designating section 45 of the correlating section 40 while viewing the display device 60. Alternatively, the arrangement of targets is determined and photographed in stereo generally in parallel beforehand. Then, since the arrangement of the targets is kept in the photographed images, correlation can be performed automatically. Further, six target marks or more may be determined separately and designated as templates beforehand, which also allows automatic correlation. Since the number of corresponding points in the left and right images is six at smallest, the operation can be simple even when performed manually.

For an automatic extraction method of position detection patterns, refer to the description of FIG. 8.

[Orientation]

As described above, performance to set the reference point and the corresponding point, such as the position of the retro target, in the stereo image of the measuring object 1 stored in the photographed image data storage section 13 is referred to as the orientation work.

Here, the orientation work includes to read the coordinates of a reference point appropriate as a characteristic point and those of a corresponding point with respect to the designated point on a reference image designated by the operator with a mouse cursor or the like, using the reference point setting section 42 and the corresponding point search section 43. Six or more corresponding points are normally required for each image. If three-dimensional coordinate data on the measuring object 1 separately measured by a three-dimensional position measurement device (not shown) are stored beforehand in the three-dimensional coordinate data storage section 53, the reference point coordinates and the images are correlated to determine absolute orientation. If not, relative orientation is determined.

For example, if an overlapping stereo image includes four color-coded targets CT each including three position detection patterns (retro target parts) P1, an orientation process can be performed based on the coordinates of the centers of gravity of the total of twelve position detection patterns (retro target parts) P1.

Since orientation can be determined with six points at least, each color-coded target may include two position detection patterns at least. In that case, orientation is performed using eight points.

This process can be performed also manually or semi-automatically. That is, the center of gravity of a position detection pattern P1 in a color-coded target CT may be visually checked and clicked with a mouse on the left and right images, or as described before, the vicinity of a position detection pattern P1 may be clicked with a mouse for automatic position detection. A reference point and a corresponding point may be determined by detecting a color-coded target CT and using an identification code.

Then, for each image selected as constituting a stereo pair, the orientation section 44 performs an orientation calculation process using the coordinates of the corresponding points obtained through the orientation work (S40). The orientation calculation process allows calculation of the position and the tilt of the camera that photographed the images, the positions of the corresponding points, and the measurement accuracy. In the orientation calculation process, relative orientation is performed to correlate a pair of photographed images or a pair of model images, while bundle adjustment is performed to determine orientation between plural or all images.
Next, the orientation calculation process is described in detail.

[Relative Orientation]

Now, a description is made of the relative orientation performed by the orientation section 44.

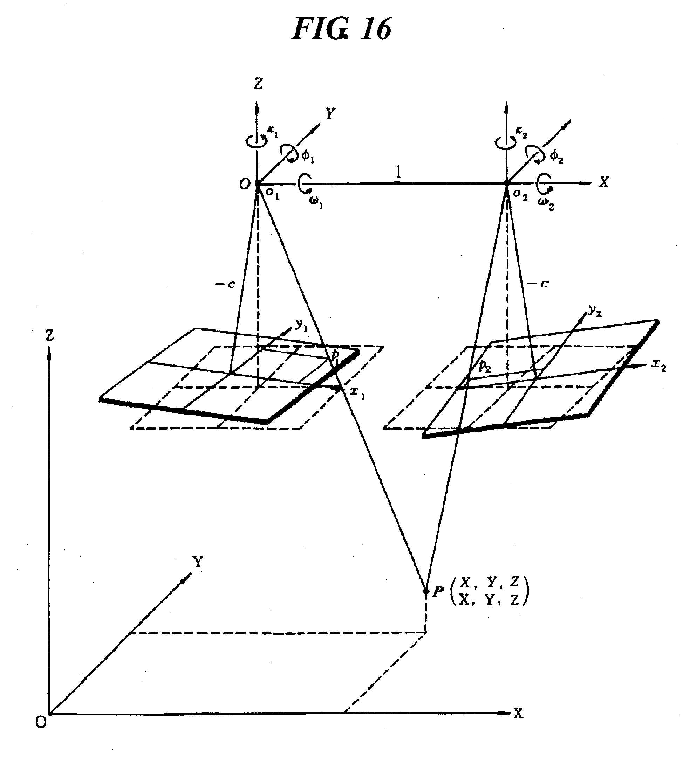

FIG. 16 is a diagram for explaining a model image coordinate system XYZ and camera coordinate system xyz in a stereo image. The origin of the model image coordinate system is used as a left projection center, and the line connecting it with a right projection center is used as the X-axis. As for the reduction scale, the base length is used as the unit length. At this time, parameters to be obtained are five rotational angles, namely Z-axis rotational angle $\kappa 1$ and Y-axis rotational angle $\varphi 1$ of the left camera, and Z-axis rotational angle $\kappa 2$, Y-axis rotational angle $\varphi 2$ and X-axis rotational angle $\omega 2$ of the right camera.
First, the parameters required to decide the positions of the left and right camera are calculated from the following coplanarity condition equation (Equation 3):

$$\begin{vmatrix} X_{01} & Y_{01} & Z_{01} & 1 \\ X_{02} & Y_{02} & Z_{02} & 1 \\ X_1 & Y_1 & Z_1 & 1 \\ X_2 & Y_2 & Z_2 & 1 \end{vmatrix} = C \qquad \cdots\cdots \quad (\text{Equation } 3)$$

$X_{01}, Y_{01}, Z_{01}$ : projection center coordinates of left image
$X_{02}, Y_{02}, Z_{02}$ : projection center coordinates of right image
$X_1, Y_1, Z_1$ : image coordinates of left image
$X_2, Y_2, Z_2$ : image coordinates of right image

In this case, X-axis rotational angle $\omega_1$ of the left camera is 0 and thus need not be considered.
Under the above conditions, the coplanarity condition equation (Equation 3) is modified into (Equation 4), and the respective parameters are obtained by solving (Equation 4) :

$$F\left(\kappa_1 , \phi_1 , \kappa_2 , \phi_2 , \omega_2\right) = \begin{vmatrix} Y_1 & Z_1 \\ Y_2 & Z_2 \end{vmatrix} = Y_1 Z_2 - Y_2 Z_1 = 0$$

$$\cdots\cdots \quad (\text{Equation } 4)$$

Here, the coordinate transformation relations (Equation 5) and (Equation 6) as shown below hold true between the model image coordinate system XYZ and the camera coordinate system xyz:

$$\begin{pmatrix} X_1 \\ Y_1 \\ Z_1 \end{pmatrix} = \begin{pmatrix} \cos\phi_1 & 0 & \sin\phi_1 \\ 0 & 1 & 0 \\ -\sin\phi_1 & 0 & \cos\phi_1 \end{pmatrix} \begin{pmatrix} \cos\kappa_1 & -\sin\kappa_1 & 0 \\ \sin\kappa_1 & \cos\kappa_1 & 0 \\ 0 & 0 & 1 \end{pmatrix} \begin{pmatrix} x_1 \\ y_1 \\ -c \end{pmatrix}$$

$$\cdots\cdots \quad (\text{Equation } 5)$$

$$\begin{pmatrix} X_2 \\ Y_2 \\ Z_2 \end{pmatrix} = \begin{pmatrix} 1 & 0 & 0 \\ 0 & \cos\omega_2 & -\sin\omega_2 \\ 0 & \sin\omega_2 & \cos\omega_2 \end{pmatrix} \begin{pmatrix} \cos\phi_2 & 0 & \sin\phi_2 \\ 0 & 1 & 0 \\ -\sin\phi_2 & 0 & \cos\phi_2 \end{pmatrix} \begin{pmatrix} \cos\kappa_2 & -\sin\kappa_2 & 0 \\ \sin\kappa_2 & \cos\kappa_2 & 0 \\ 0 & 0 & 1 \end{pmatrix} \begin{pmatrix} x_2 \\ y_2 \\ -c \end{pmatrix} + \begin{pmatrix} 1 \\ 0 \\ 0 \end{pmatrix}$$

$$\cdots\cdots \quad \text{(Equation 6)}$$

Using these equations, unknown parameters are calculated by the following procedures:

(i) Initial approximate values of the parameters ($\kappa$1, $\varphi$1, $\kappa$2, $\varphi$2, $\omega$2) are normally 0.
(ii) A derivative coefficient obtained when the coplanarity condition equation (Equation 4) is Taylor-expanded around the approximate values and linearized is calculated from the equations (Equation 5) and (Equation 6), to formulate an observation equation.
(iii) The least squares method is applied to calculate a correction value with respect to the approximate values.
(iv) The approximate values are corrected.
(v) Using the corrected approximate values, the operations (ii) to (v) are repeated until a convergence is achieved. In the case where the arrangement of the orientation points is not preferable, for example, a convergence may not be achieved. If a convergence is not achieved normally, orientation results with an error indication are output to show which part of the image is not preferable. In this case, other orientation points on the image, if any, are selected to again perform the above calculations. If there are no other orientation points, the arrangement of the orientation points is changed.

Turning to FIG. 4, the model image forming section 48A forms a pair of model images based on an orientation element determined by the orientation section 44 (S42), and the model image storage section 48B stores the model image formed by the model image forming section 48A (S43) . The photographed / model image display section 48 displays this model image as a stereo image on the display device 60 (S44).

[Precise orientation]

Here, a description is made of an example of precise orientation using a target having reference points in addition to color-coded targets CT as position detection marks.

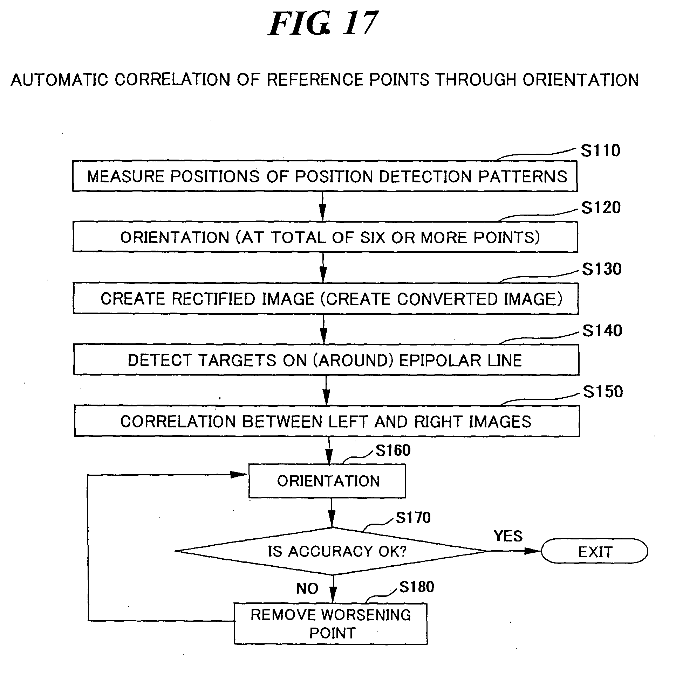

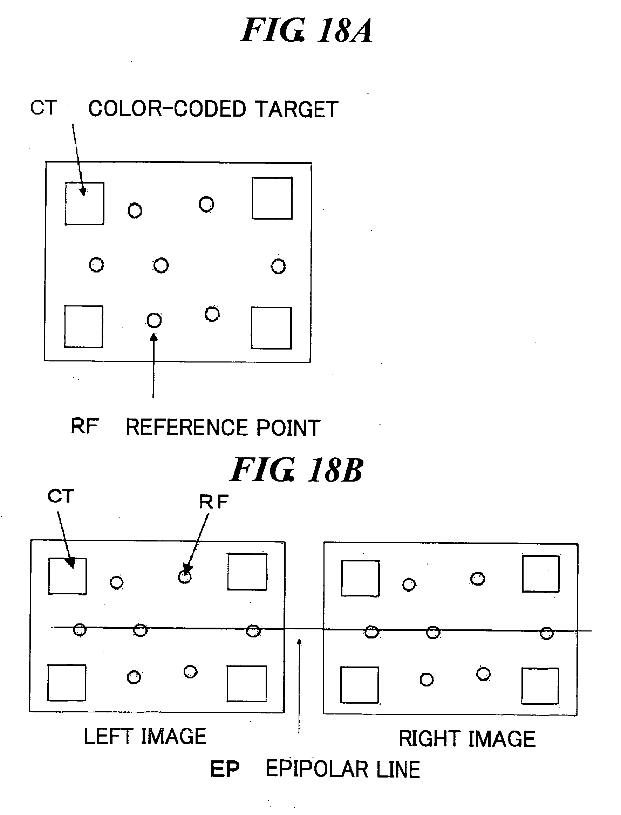

FIG. 17 is an exemplary flowchart of the automatic correlation using reference points. FIG. 18 shows an example of target having reference points RF. In FIG. 18A, plural retro targets are arranged as reference points RF. In the case of a flat measuring object, color-coded targets CT alone may be sufficient. However, in the case where the measuring object 1 has a complicated surface or a surface with a large curvature, a large number of retro targets as reference points RF may be affixed in addition to the color-coded targets CT for increased measurement reliability.
Here, a description is made of the automatic position detection and correlation using the reference points RF.
Description is made based on the flowchart of FIG. 17. First, the positions of position detection patterns (retro target parts) P1 in color-coded targets CT are detected (S110). For the detection of retro targets, refer to the description of FIG. 8. In FIG. 18A, the four color-coded targets CT have a total of six or more position detection patterns P1, which allows an orientation process. Therefore, an orientation process is performed (S120), and then, a rectification process is performed (S130).
Instead of the rectification process described here, affine transformation or Helmert transformation may be performed to transform the images. In those cases, the number of position detection targets may be four or more.
A rectified image (model image) is created by a rectification process. The rectified image is an image in which the left and right images are arranged so that the epipolar lines EP are aligned horizontally. Thus, as shown in FIG. 18B, the reference points RF in the left and right images are rearranged on the same epipolar line (horizontal line) EP. In the case the orientation process results are used to create a model image, such a rectified image can be obtained. In the case where another transformation technique such as affine transformation or Helmert transformation is used, the reference points are located not necessarily on the same horizontal line but still close to it.
Then, targets to be reference points RF on the same epipolar line EP are searched for (S140). In the case of a rectified image, one-dimensional search on a single line is sufficient and hence the search is easy. In the case where another transformation technique is used, the search is made not only on the epipolar line but also on several lines around the epipolar line.

This search utilizes a cross-correlation method represented by template matching, for example. The reference points RF, as a template image, may have the same pattern as the position detection patterns P1 in color-coded targets CT, which conveniently allows the reference points RF to be detected concurrently with the position detection patterns P1. In the case where retro targets are used as reference points RF, a rough size can be calculated beforehand based on the photographing conditions and such a size may be registered in a template. Also, in the case where retro targets are used where reflection intensity is high, the reference points may be detected based on their brightness from an image obtained through scanning, and registered in a template.

[Cross-correlation method]

The following equations are used in the procedure of a method using a cross-correlation factor.

$$C(a,b) = \sum_{m_1=0}^{N_1-1} \sum_{n_1=0}^{N_1-1} \frac{\left\{ I_{(a,b)}(m_1,n_1) - \bar{I} \right\} \left\{ T(m_1,n_1) - \bar{T} \right\}}{\sqrt{I_{\sigma_{ab}} T_\sigma}}$$

$$\cdots\cdots \text{(Equation 7)}$$

where

$$\bar{I} = \frac{1}{N_1^2} \sum_{m_1=0}^{N_1-1} \sum_{n_1=0}^{N_1-1} I_{(a,b)}(m_1,n_1)$$

$$\cdots\cdots \text{(Equation 8)}$$

$$\bar{T} = \frac{1}{N_1^2} \sum_{m_1=0}^{N_1-1} \sum_{n_1=0}^{N_1-1} T(m_1,n_1)$$

$$I_{\sigma_{ab}} = \frac{1}{N_1^2} \sum_{m_1=0}^{N_1-1} \sum_{n_1=0}^{N_1-1} \left\{ I_{(a,b)}(m_1,n_1) - \bar{I} \right\}^2$$

$$\cdots\cdots \text{(Equation 10)}$$

$$T_\sigma = \frac{1}{N_1^2} \sum_{m_1=0}^{N_1-1} \sum_{n_1=0}^{N_1-1} \left\{ T(m_1,n_1) - \bar{T} \right\}^2$$

$$\cdots\cdots \text{(Equation 11)}$$

$I_{(a,b)}(m_1,n_1)$: partial image of input image
$T(m_1,n_1)$: template image

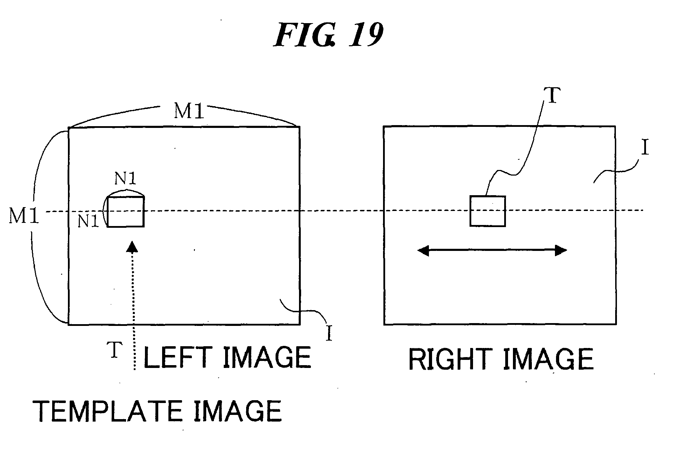

FIG. 19 shows an example of search range and template image in the left and right images. An image of N1 × N1 pixels, for example centered on a characteristic point designated by the corresponding point designating section 45 of the correlating section 40, is cut out as a template image T from the left image. Then, an area of the right image of M1 × M1 pixels larger than the template image T is designated as a search range I (with (M1 - N1 + 1)² pixels), and the template image T is moved on the search range I. Then, an image position where the cross-correlation factor C(a, b) formulated by the above equations is maximum is searched for, and with the position the template image T is regarded as being found. If the left image and the right image are completely coincident with each other, the cross-correlation factor C(a, b) is 1.0. Turning to FIG. 17, in general, the position and the tilt of the camera used in the photographing are obtained through the orientation process (S120), and the orientation results are used to create a rectified image (S130). Here, the model image forming section 48A forms a rectified image using the orientation results by the orientation section 44.

If a reference point RF is found on an identical line as shown in FIG. 18B, it is identified (numbered) as a corresponding point (S150) . In the case where plural reference points RF are on an identical line, the reference points RF are identified according to their horizontal positions. Then, orientation is determined with an additional, detected reference point RF (S160). The reliability of orientation can be increased by the repeated orientation. If the orientation results are accurate enough (S170) and have no problem, the process is terminated. If not accurate enough, a worsening point is removed (S180), and orientation is determined again (S160).

This orientation process is also performed for each stereo image pair. The model image forming section 48A forms a pair of model images based on an orientation element determined by the orientation section (S42), and the model image storage section 48B stores the model image formed by the model image forming section 48A (S43). The photographed / model image display section 48 displays this model image as a stereo image on the display device 60 (S44). Orientation using a target having reference points, and repeated orientation, can increase the orientation accuracy. Such orientation is normally performed based on a model image once subjected to an orientation process. The model image is read from the model image storage section 48B to the read image storage section 141 of the extraction section 41, and used for reorientation.

[Collinearity condition equation for bundle adjustment]

Description of the flowchart of FIG. 4 is continued.
Next, a bundle adjustment is performed using all the points (the entire image) subjected to the automatic orientation (included in S40). The precision of the entire image can be calculated and adjusted through this process. This process itself is performed by calculation based on the following principle.

The collinearity condition equation is a basic equation for bundle adj ustment where the projection center, the photographic image, and the object on the ground are aligned on a straight line, as formulated by (Equation 12):

$$\left.\begin{array}{l} y = -c\dfrac{a_{21}(X-X_0)+a_{22}(Y-Y_0)+a_{23}(Z-Z_0)}{a_{31}(X-X_0)+a_{32}(Y-Y_0)+a_{33}(Z-Z_0)} + \Delta y \\[3mm] x = -c\dfrac{a_{11}(X-X_0)+a_{12}(Y-Y_0)+a_{13}(Z-Z_0)}{a_{31}(X-X_0)+a_{32}(Y-Y_0)+a_{33}(Z-Z_0)} + \Delta x \end{array}\right\}$$

$$\cdots\cdots \quad (\text{Equation } 12)$$

c: screen distance (focal length), *x, y:* image coordinates
*X, Y, Z:* object space coordinates (reference point, unknown point)
$X_0, Y_0, Z_0$: photographing position of camera
$a_{11}$ - $a_{33}$: tilt of camera (elements of 3 × 3 rotation matrix)
Δx, Δy: terms for correcting interior orientation of camera

The above-described orientation method using a cross-correlation method and a bundle method may be repeated to increase the accuracy of orientation. In this case, before orientation, the arrangement section 47 may arrange a series of model images of the measuring object 1 such that the identification codes of coded marks CT shared by adjacent model images coincide with each other.

[Determination of matching area]

Returning to FIG. 4, next, the correlating section 40 designates measurement positions (determines a matching area) (S45), the three-dimensional coordinate data calculation section 51 performs a stereo measurement (S50), and the three-dimensional' coordinates of corresponding points in a stereo image are registered in the three-dimensional data storage section 53.

[Automatic determination of stereo matching area]

Next, a description is made of the designation of measurement positions, that is, the determination of a matching area, for three-dimensional measurement (surface measurement) (S45).
To determine a matching area, the corresponding point search section 43 automatically sets a matching range so as to include the color-coded targets CT located at the four corners of a stereo image as shown in FIG. 6A. Before the matching, the arrangement section 47 may arrange a series of model images of the measuring object 1 such that the identification codes of coded marks CT shared by adjacent model images coincide with each other.

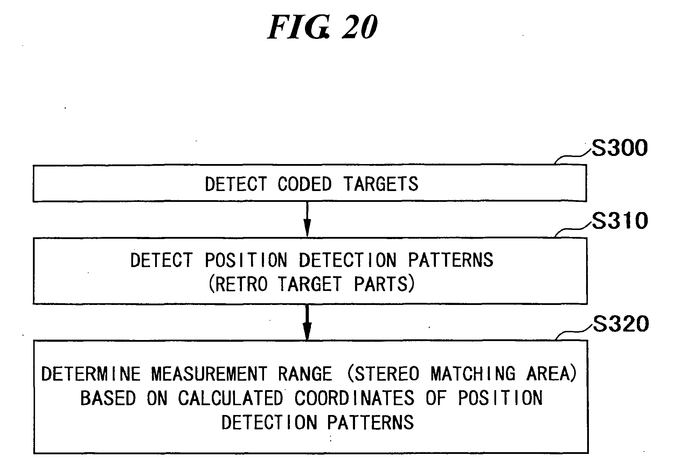

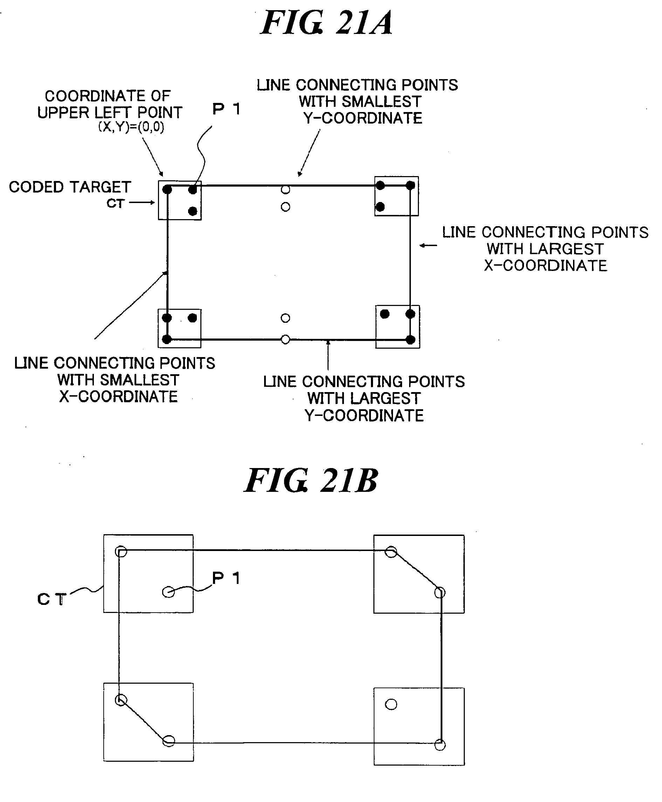

FIG. 20 is an exemplary flowchart of the process of automatic determination of a stereo matching area. FIG. 21 is a diagram for explaining how a stereo matching area is set. FIG. 21A shows an example in which color-coded targets CT each have three retro targets for position detection. First, color-coded targets CT located at the four corners of a stereo image are detected (S300). Then, respective retro target parts P1 in the four color-coded targets CT are detected (S310). For the detection of these, refer to the description of FIG. 7 and FIG. 8. Then, based on the coordinate values of the respective retro target parts P1 detected, a measurement area is set by connecting the outermost retro target parts P1 so as to include all the retro target parts P1 (S320). That is, with the upper left retro target part P1 assumed as the origin (0, 0), a matching area to be measured can be automatically determined by, for example, connecting the points with the smallest Y-coordinate to form the upper horizontal line, connecting the points with the largest Y-coordinate value to form the lower horizontal line, connecting the points with the smallest X-coordinate value to form the left vertical line, and connecting the points with the largest X-coordinate value to form the right verticl line.

By determining matching areas in this way, overlap between model images can be secured as shown in FIG. 6B. That is, by arranging color-coded targets CT in the vicinity of the four corners of a screen and always determining the area defined by connecting the outermost retro targets included in these color-coded targets CT as a matching area, it is possible to determine a stereo matching area automatically while securing overlap between model images. In this case, each color-coded target CT needs to include at least two position detection patterns (retro target parts) P1 in order to allow a matching area to be set automatically. FIG. 21B shows an example in which color-coded targets CT each have two retro targets for position detection. In this case, some lines connecting retro targets in color-coded targets may be oblique.

In the case of fully automatic processing, with a large number of codes identified, photographing can be performed in an arbitrary order by the basic unit of pair of images (typically stereo) while securing overlap between adjacent images. With a fixed photographing order, automation is also possible even with a small number of codes identified. In this case, color-coded targets CT included in two (overlapping) images photographed in stereo need to be identified. A stereo measurement is performed (S50) on an area where the matching area is determined (S45) For stereo measurement, an image correlation process using a cross-correlation factor method is used, for example.

[Measurement position designation]

The measurement position can be designated semi-automatically or manually. Next, a description is made of semi-automatic and manual measurement position designation and subsequent measurement.
FIG. 22 is an exemplary flowchart of the measurement position designating process. When entering the measurement position designating process (S400), one of the three modes of the measurement position designating process, i.e. manual mode, semi-automatic measurement mode and automatic measurement mode, is selected (S402).

A stereoscopic image displayed on the display device 60 can be viewed and checked during measurement. In addition, a stereo image (photographed image, model image) can be displayed on the display device 60. A designation in the depth direction of the stereoscopic image is made with the corresponding point designating section 45 through a dial provided to a mouse, a discrete dial, etc.

When the manual mode is selected, the measurement position designating process for the manual mode is started (S410). Here, a description is made of a procedure for the operator to designate a measurement point while viewing a stereo image on the display device 60. The operator designates a position desired to be measured as a characteristic point on the left image displayed on the display device 60 (S412). Then, a position considered to be the same point is designated as a characteristic point on the right image displayed on the display device 60 (S414). Then, while viewing the display device 60, it is checked whether or not the characteristic point on the left image and the characteristic point on the right image are on a coincident characteristic point designated with the cursor as the desired measurement point (S416). The position of the point designated with the cursor involves not only the in-plane direction but also the depth direction. If not on a coincident point, the mouse of the corresponding point designating section 45 is used to designate the position desired to be measured (S418).

When the operator views a stereoscopic image on the display device 60, the operator can observe also through the depths and therefore adjusts the position in the depth direction (S420). That is, if adjustment in the depth direction has not been made, the cursor appears floating or sunken relative to the object point. In this case, with a dial for adjustment in the depth direction, the cursor can be positioned to the object point using the dial. This cursor positioning work is substantially the same as position adjustment between the left and right images, but is more errorless and reliable due to stereoscopic viewing. That is, position adjustment between the left and right images can be made even where there are few characteristics. If the characteristic point on the left image and the characteristic point on the right image are coincide with each other and hence the determination is OK, the designated position is established with the button of the mouse or the like, and the coordinate position is read (S422).

When the semi-automatic measurement mode is selected, the measurement position designating process for the semi-automatic measurement mode is started (S430). The semi-automatic measurement mode is performed with viewing the display device 60. In the semi-automatic measurement mode, the operation of the corresponding point search section 43 shifts to an automatic search mode (S432). When the operator designates a measurement point on the left image with a mouse (S434), the corresponding point search section 43 searches for a measurement point on the right image identical to that on the left image (S436). The way the corresponding point search section 43 searches for a measurement point on the right image identical to that on the left image is exactly the same as described for the corresponding point determination in relation to S226. Then, it is checked whether or not the position found on the right image is OK (S438).

If the position found on the right image is not identical to the measurement point on the left image, the mouse of the corresponding point designating section 45 is used to designate a position desired to be measured as in the manual mode (S440).

At this time, since the operator can observe in the depth direction and the in-plane direction of the image at the same time on the display device 60, the position in the depth direction can also be adjusted (S442). If the characteristic point on the left image and the characteristic point on the right image are coincide with each other and hence the determination is OK, the designated position is established with the button of the mouse or the like, and the coordinate position is read (S444) At this time, an OK indication may preferably be displayed at a corresponding position of the right image on the display device 60. A stereoscopic image display can show the OK indication by changing the color and the shape of the cursor, and also allows the operator to check if the points are really coincident with each other with his or her own eyes.

When the automatic measurement mode is selected, the measurement position designating process for the automatic measurement mode is started (S450). In the automatic measurement mode, the three-dimensional coordinate values of a designated area can be measured collectively. A measurement area designating process is performed to designate an area desired to be measured (5452) . That is, boundary points which will define the outermost part of the measurement area are designated on the left and right images. For example, in the case where almost all the area of a rectangular screen is desired to be measured at a time, four boundary points to form corresponding boundaries are designated as shown in FIG. 21. The operator views an indication of the boundary points on the display device 60, and determines whether or not the boundary points designated on the left and right images are appropriate (S454). If wrong boundary points are designated or the operator is not satisfied with the designated points, the process returns to S452 for redesignation.

If appropriate boundary points are designated on the left and right images, the designated points are connected to clearly show the measurement area in the stereoscopic image representation (S456). In the stereoscopic image representation, the boundary points are connected to form the corresponding boundaries. Then, the operator determines whether or not the designated measurement area is appropriate with reference to the boundary points and the representation of the connected lines (S458). If not appropriate, inappropriate designated points and corresponding connected lines are cleared (S460), and the process returns to S452 for redesignation. If appropriate, the designated measurement area is established as the measurement area (S462). When the measurement area is determined in this way, corresponding points in the left and right images are correctly determined in the area, allowing reliable collective measurement. In addition, in the collective measurement, the corresponding points in the left and right images can be utilized to increase both the reliability and the speed.

Then, the corresponding point search section 43 automatically performs a process of collectively detecting corresponding points in the area designated as the measurement area (S464). Here, an image correlation process is used. For example, the detection of corresponding points may be performed using the cross-correlation factor method described before, with the left image as a template and the right image as a search area. For example, corresponding points in the left and right images are obtained by setting a template image T on the left image, and making a search on the same epipolar line EP on the entirety I of the right image, as shown in FIG. 19. For the image correlation process, a course to fine correlation method or other common methods such as image correlation processing method may be used.

[Image display]

Turning to FIG. 4, a stereo measurement is performed on the area designated as the measurement position using the functions of the correlating section 40 (extraction section 41, reference point setting section 42, corresponding point search section 43, orientation section 44, etc.) (S50), and the three-dimensional coordinates of the measuring object 1 are obtained through the calculation by the three-dimensional coordinate data calculation section 51 (S55). The stereoscopic two-dimensional image forming section 54 creates a stereoscopic two-dimensional image of the measuring object 1 based on the three-dimensional coordinates obtained by the three-dimensional coordinate data calculation section 51 or read from the three-dimensional coordinate data storage section 53, and the stereoscopic two-dimensional image storage section 55 stores the stereoscopic two-dimensional image.

Then, the image correlating section 56 correlates the stereo image (photographed image or model image) of the measuring object 1 and the stereoscopic two-dimensional image formed by the stereoscopic two-dimensional image forming section 54 based on the three-dimensional coordinate data, using the relationship of corresponding points found by the orientation section 44. The stereoscopic two-dimensional image display section 57 displays on the display device 60 a stereoscopic two-dimensional image of the measuring object 1 with stereoscopic texture, for example, using the stereo image correlated by the image correlating section 56. Such a stereoscopic two-dimensional image of the measuring object 1 on the screen can show a perspective view thereof as viewed from an arbitrary direction, and a wire-framed or texture-mapped image thereof. Texture-mapping refers to applying texture that produces a stereoscopic effect to a two-dimensional image of the measuring object 1. The photographing position of the camera and the position of the reference point may also be displayed.

In this way, automatic measurement of a surface is performed, the three-dimensional coordinates of the measuring object 1 are obtained, and a stereoscopic image is displayed on the display device 60.

When the operator designates the orientation of the measuring object 1 for display through the posture designating section 58 using a mouse, a keyboard, etc. , the image conversion section 59 performs a coordinate transformation to coincide the orientation of the measuring object 1 with the orientation designated through the posture designating section 58 and display the measuring object 1 on the display device 60. Such a function of arbitrarily designating the orientation of the measuring object 1 for display allows the measurement results or the measuring object 1 to be displayed on the display device 60 as viewed from any angle or viewpoint. It is therefore possible for the operator to visually check the measuring obj ect 1.

As described above, selection of a stereo pair of images, a search for corresponding points in the selected stereo pair, orientation, determination of a stereo matching area for surface measurement, surface measurement, etc., may be performed automatically, semi-automatically or manually through the use of coded targets CT.

[Second Embodiment]

Instead of or in addition to affixing coded targets CT, a projection device 12 may be used to project reference patterns onto the measuring object 1.

FIG. 23 is a block diagram illustrating an example of the general structure of a three-dimensional measurement system 100A in a second embodiment. The three-dimensional measurement system 100A has a similar structure to that of the three-dimensional measurement system 100 in the first embodiment (see FIG. 2), except that a projection device 12 and a calculation processing section 49 are additionally provided. The projection device 12 projects various patterns such as position detection pattern onto the measuring object 1 so that the image photographing device 10 photographs the various projected patterns for use in orientation or three-dimensional measurement. The calculation processing section 49 receives image data and detects the various patterns therefrom, and also generates various patterns for the projection device 12 to project.

FIG. 24 shows an example of reference pattern to be projected onto the photographing object 1. FIG. 24B shows a dot pattern, and FIG. 24C shows a grid pattern. In the grid pattern, equally spaced vertical and horizontal lines are arranged perpendicular to each other. In the dot pattern, dots are arranged at positions corresponding to the intersections of the grid. FIG. 24A shows an example of measuring object 1 on which the reference pattern of FIG. 24B is projected. In this embodiment, a pattern of retro targets (which may be colored) or color-coded targets CT (for example, with three color code unit areas), for example, is arranged at the dots or the grid intersections, and the pattern is projected onto the measuring object 1.

In FIG. 24A, reference numeral 10 denotes a stereo camera as an image photographing device, 12 denotes a projection device (projector), and 49 denotes a calculation processing section. The calculation processing section 49 includes a pattern detection section 491 for receiving a photographed image from the image photographing device 10 and detecting a pattern such as characteristic points of and targets affixed to the measuring object 1, a pattern forming section 492 for forming a projection pattern such as reference pattern, reference points RF, wire-frame pattern, etc., and a pattern projection section 493 for allowing the projection device 12 to project the projection pattern formed by the pattern forming section 492. A color modification section 494 for modifying colors in a photographed image and a projection pattern may also be provided. The color modification section 494 has the function of modifying colors in a stereo pair of images based on the reference colors of a color-coded target CT. The calculation processing section 49 is additionally provided in the correlating section 40. In this case, the pattern detection section 491 may not necessarily be provided, because its function can be fulfilled by the extraction section 41, the reference point setting section 42, the corresponding point search section 43, the orientation section 44, the identification code discrimination section 46 and the arrangement section 47 (which can perform the function of the pattern detection section 491). However, in the case where a special reference pattern or a special pattern of reference points RF is used, the addition of the pattern detection section 491 is beneficial. The color modification section 494 may not necessarily be provided, either, since the function of the color correction section 312 can be utilized.

The stereo camera 10 and the projector 12 can be used as follows.

(a): The projector 12 lights up the range to be photographed by the camera, and the stereo camera 10 photographs the range.

(b) : The projector 12 projects light for texture (only light), and the camera 10 photographs a stereo pair of images as an image (image of the measuring object) for texture of one model image.

(c): For preparation before measurement, the projector 12 projects a pattern such as reference pattern. The projected pattern is photographed in stereo. Any pattern allowing visual recognition or calculation of the shape of the measuring object 1 may be used, such as a pattern of circles arranged in a grid, a pattern of lines forming a grid, etc. A visual check or a check by calculation follows. Since a pattern of circles and a grid pattern are deformed according to the shape of the measuring object 1, the general shape of the measuring object 1 can be grasped by checking which points in the pattern are displaced. In the case of calculation, the pattern detection section 491 detects the pattern. For example, points originally arranged in a grid but not equally spaced in the photographed image may be detected as displaced points. Reference points RF, color-coded targets CT, or another pattern in a different shape may also be photographed at the same time.

To check displaced points in a pattern, approximate measurement may be performed on the area. A photographed image is sent to the pattern detection section 491 to calculate orientation. Further, when the number of measurement points is small, the projected orientation points may be treated as measurement points to terminate the measurement process.

Reference points RF can be affixed to the displaced points known from the preparation before measurement. Alternatively, other action may be taken such as increasing the pattern. Color-coded targets CT for determining the photographing range can also be affixed. The size, number and arrangement of the orientation points can be calculated to reflect the actual pattern projection.

(d): In the orientation process, the projector 12 projects color-coded targets CT and reference points RF. Here, color-coded targets CT are affixed at irradiated positions. If already affixed in the preparation, color-coded targets CT are affixed at other points. The affixation is not necessary if measurement is performed using the projected pattern. The color-coded targets CT are photographed in stereo to be used in the orientation process.

(e): In three-dimensional measurement, a pattern for measurement is irradiated from the projector 12. In this case, a random pattern is irradiated for stereo matching (three-dimensional measurement), for example. The required accuracy for the pattern for measurement is calculated beforehand from the camera condition, and a pattern for measurement with the size satisfying the accuracy is irradiated. The irradiated pattern for measurement is photographed in stereo to be used in three-dimensional measurement.

(f): When moving on to a next photographing position, the projector 12 may roughly navigate to the next photographing position.

The above processes can be fully automated. In that case, affixing work is not performed, but the measurement is performed using only the pattern projected by the projector.

The structure except for the projection device 12 and the calculation processing section 49, and the processes except for those described above are the same as in the first embodiment, thereby achieving the same effect.

[Third Embodiment]

This embodiment is an example in which a color retro target is used as the position detection pattern P1. This embodiment adopts (4) to use a colored position detection pattern as a target position search method.

(4) Retro targets at three corners of a color-coded target CT are given different colors so that the respective retro targets reflect different colors. Since retro targets at three corners of one color-coded target are given different colors, the respective retro targets can be easily discriminated. In the case of grouping a large number of retro targets, the grouping process can be made easy by selecting closest retro targets of different colors.

In the case of using a large number of retro targets as reference points RF, retro targets of color-coded targets CT and retro targets as separate units exist as mixed. In such a case, colored retro targets are used in color-coded targets and white retro targets are used as separate units, allowing easy discrimination.
For the detection of the center of gravity, reference is made to the description of FIG. 8.

Instead of color-coded targets CT, a single or plural color retro targets can be used as position detection marks. For example, the number of colors may be increased or colors may be arranged at random, facilitating the search for a point corresponding to a reference point and for a stereo image pair. Further, plural color retro targets P8 can be used in combination. For example, as shown in FIG. 25, three color retro targets may be collected together as one mark, and the combination of colors may be changed, also facilitating the search for a point corresponding to a reference point and for a stereo image pair.
This embodiment is the same as the first embodiment except for the color-coded target, thereby achieving the same effect.

According to the three-dimensional measurement systems of the persent invention described heretofore in relation to the above embodiments, the use of coded marks (targets) can improve the efficiency of and enable the automation of non-contact three-dimensional measurement over a wide range.

Various modified examples of the color-coded target CT2 to CT11 are described below.
FIG. 1B shows a color-coded target CT2 with six color code parts P3. The three unit patterns of color code pattern P3 of the color-coded target CT1 in FIG. 1A are divided diagonally into six unit patterns. The area and the direction of the color-coded target CT are detected in the same way as with FIG. 1A, by seeing the changes in color through scanning the interior of the triangle formed by connecting the centers of gravity, and labeling the retro targets based on the color changes. That is, two changes in color are detected in the vicinity of R1, and no change in color is detected in the vicinity of R2 and R3. The reading process of color code part P3 is performed at an increased number of, or six, positions. When six colors are used for color codes, the codes can represent $6 \times 5 \times 4 \times 3 \times 2 \times 1 = 720$ types of codes. The last color code part (the last part, "$\times 1$") does not affect the number of codes, but is necessary for relative comparison. The last part can also be utilized to check if there is any misrecognition of color code part.

The color-coded target CT3 of FIG. 1C has nine smaller unit patterns of color code part P3.
When detecting the area and direction of the color-coded target CT3, two changes in color are detected in the vicinity of R1 and one change in color is detected in the vicinity of R2 and R3, thus allowing identification. R1, R2 and R3 can be discriminated by detecting positional relationship with the white part P4. The reading process of color code part P3 is performed at an increased number of, or nine, positions. When nine colors are used for color codes, the codes can represent 9 factorial = 362880 codes. Otherwise, the process can be performed in the same way as with FIG. 1A.

A color-coded target CT4 of FIG. 26 is the color-coded target CT1 of FIG. 1A with a black area part P5 attached to the outer side thereof. The black area part P5 can suppress the influence of the color and the pattern of the measuring object.
The color-coded target CT4 of FIG. 26 is just the color-coded target CT1 of FIG. 1A with the black area part P5 formed on the outer side thereof, and hence can be processed in the same way as the color-coded target CT1 of FIG. 1A. The black area part P5 can be provided to color-coded targets other than the one of FIG. 1A.

A color-coded target CT5 of FIG. 27 is the color-coded target CT2 of FIG. 1B with its reference color parts P2 removed and one of its retro target parts P1 made larger.
Since the color-coded target CT5 of FIG. 27 has a larger retro target corresponding to R1, the process of labeling the retro target parts as R1, R2 and R3 can be achieved by detecting the size of the retro targets. However, the absence of reference color parts P2 as a result of the retro target corresponding to R1 made larger makes it difficult to discriminate color codes.

As a measure, for example, restrictions may be imposed that require the use of six unique colors for color codes, so that all the code colors appear in the color code parts P3. In this way, the colors of the color coded parts P3 need only be compared with the six code colors, and in addition, that can be done by relative comparison between the colors of the color coded parts P3. The same number of codes as with the color-coded target CT2 of FIG. 1B, or 720 codes, can be represented.

A color-coded target CT6 of FIG. 28 is the color-coded target CT1 of FIG. 1A in which R2 and R3 of its retro target parts P1 and its white part P4 are replaced by reference color parts P2 to allow detection of the area and the direction of the color-coded target. Only one retro target part P1, or R1, is provided. The reference color parts P2 of the color-coded target CT1 of FIG. 1A are replaced by a color code pattern P3, providing one more color code pattern.

In the case where reference color parts P2 are used to detect the area and the direction, the center of gravity can be detected in the same way as with retro targets, though with less accuracy, by finding the center of gravity of the quadangular pattern and detecting the difference in brightness of light of the reference colors.

A color-coded target CT7 of FIG. 29 is a small type of the color-coded target CT1 of FIG. 1A in which the area of its color code parts P3 is reduced and one retro target part P1, or R1, and four color code patterns are provided. Also in this color-coded target CT7, the reference color parts P2 are used to detect the area and the direction.

A color-coded target CT8 of FIG. 30 is a small type of the color-coded target CT7 of FIG. 29 with its white part P4 replaced by a color code part P3 to provide five color code patterns.

A color-coded target CT9 of FIG. 31 is the color-coded target CT1 of FIG. 1A with a black separation area part P6 provided between its unit patterns. This can reduce the occurrence of errors in the discrimination of the area and colors.

A color-coded target CT10 of FIG. 32 is the color-coded target CT1 of FIG. 1A with its retro targets P1 replace by template patterns P7 to allow template matching detection. This allows detection of the center of gravity with high accuracy as with retro targets.

A color-coded target CT11 of FIG. 33 is the color-coded target CT1 of FIG. 1A with it retro targets P1 replaced with color retro targets P8.

The direction of a color-coded target can be determined by providing colored retro targets at three corners of the color-coded target and detecting the different colors reflected from the retro targets, instead of detecting the number of colors associated with each interior angle of the triangle which is formed with the retro targets. For example, by providing a color-coded target with a retro target which reflects red light at its upper left corner, a retro target which reflects blue light at its upper right corner, and a retro target which reflects green light at its lower left corner, the direction of the color-coded target can be easily determined based on the color of light reflected from them.

The three-dimensional measurement system and the color-coded mark according to this invention described above may be utilized as follows.

The three-dimensional measurement system 100, for example, may further comprise a model image forming section 48A for forming from the pair of photographed images a pair of model images in a coordinate system assumed based on the orientation element determined by the orientation section 44; and a model image storage section 48B for storing the pair of model images; wherein: the model image forming section 48A may form a series of model images based on an orientation element determined by the orientation section 44 for the series of photographed images; the arrangement section 47 may arrange the series of model images such that the identification codes of the coded marks CT shared by adjacent model images coincide with each other; the orientation section 44 may perform sequential orientations on the arranged series of model images of the measuring object 1 such that coordinates of the reference points or the corresponding points of the coded marks CT shared by the adjacent model images coincide with each other; and the model image forming section 48A may form a new series of model images based on a new orientation element determined by the orientation section 44.

With such a constitution, epipolar lines can be made horizontal and at the same height between the stereo images, thus facilitating orientation.

In the three-dimensional measurement system 100, for example, the orientation section 44 may further perform an orientation by a bundle method on the series of model images; and the model image forming section 48A may form a new series of model images based on an orientation element determined by the orientation section 44.

With such a constitution, position coordinates over the entire image can be adjusted, thus reducing errors in orientation to a minimum.

In the three-dimensional measurement system 100, for example, the orientation section 44 may repeat the orientation process to form a new series of model images.

Here, it is preferable to alternately repeat relative orientation and orientation by a bundle method. However, each orientation method may be repeated, and the orientation processes may be performed in an arbitrary order. With such a constitution, the orientation accuracy can be improved.

The three-dimensional measurement system 100, for example, may further comprise: an image correlating section 56 for correlating three-dimensional coordinate data on the measuring object 1 and the photographed image or the model image, using the orientation element determined by the orientation section 44.

With such a constitution, three-dimensional images with high accuracy can be obtained. Three-dimensional image data are preferably correlated using an absolute coordinate system, but may also be correlated using a relative coordinate system.

In the three-dimensional measurement system 100, for example, the corresponding point search section 43 may automatically determine a search range on the pair of photographed images or the pair of model images such that the resulting search range includes at least four coded marks CT, and perform a matching process.

With such a constitution, the range of stereo matching can be automatically determined, thus enabling the automation of three-dimensional measurement.

In the three-dimensional measurement system 100, for example, the color-coded mark CT may have in a surface thereof a reference color pattern P2 having plural colors to be used as color references; and the system 100 may further comprise a color correction section 312 for correcting the colors of the color code pattern P3 with reference to the colors of the reference color pattern P2.

Here, the reference colors are typically red, green and blue, but may be any other identifiable colors. With such a constitution, the accuracy of color code identification can be improved by color correction.

In the three-dimensional measurement system 100, for example, the extraction section 41 may compare the colors of the reference color pattern P2 and colors of the images of the measuring object 1 photographed by the image photographing device 10 to discriminate the color code pattern P3.

With such a constitution, the discrimination accuracy between color code patterns can be improved by the use of the reference colors.

In the three-dimensional measurement system 100, for example, the color correction section 312 may correct the colors of the images of the measuring object 1 photographed by the image photographing device 10 with reference to the colors of the reference color pattern P2.

With such a constitution, the colors in images of the measuring object can be corrected with accuracy.

In the three-dimensional measurement system 100, for example, may further comprise a projection device 12 for projecting the color-coded mark CT.

With such a constitution, automated photographing is made possible without affixing color-coded targets.

In the color-coded mark CT, for example, the position detection patterns P1 may be identical in shape and dimensions.

With such a constitution, the extraction of the position detection patterns can be facilitated and secured by the standardization.

In the color-coded mark CT, for example, the position detection patterns P1 may have a circular pattern in a center thereof.

With such a constitution, the center of gravity of the position detection patterns can be detected with high accuracy.

In the color-coded mark CT, for example, a pattern P4 different from the detection pattern P1 may be located at one corner where the detection pattern P1 is not located.

Such a constitution is useful in checking the position detection patterns.

In the color-coded mark CT, for example, the three detection patterns P1 may have different colors.

With such a constitution, the position detection patterns themselves can serve also as reference color patterns or color code patterns.

In the color-coded mark CT, for example, the color code pattern P3 may include plural unit patterns identical in shape and dimensions but having different colors. Here, the patterns of an identical shape include rotated patterns or inverted patterns.

With such a constitution, the extraction of the color code patterns can be facilitated and secured by the standardization. Also, discrimination between color codes can be facilitated.

In the color-coded mark CT, for example, the reference color pattern P2 may include plural unit patterns identical in shape and dimensions but having different colors.

With such a constitution, the extraction of the reference color patterns can be facilitated and secured by the standardization.

In the color-coded mark CT, for example, the reference color pattern P2 may be located in a vicinity of one of the position detection patterns P1, and the color code pattern is located in a vicinity of the other position detection patterns P1.

With such a constitution, the extraction of the reference color patterns can be facilitated.

In the color-coded mark CT, for example, a number of the reference color patterns P2 located in the vicinity of one of the position detection patterns P1 may be different from a number of the color code patterns located in the vicinity of the other position detection patterns P1.

With such a constitution, the extraction of the position detection patterns to be measured can be facilitated by scanning the vicinity of the position detection patterns.

In the color-coded mark CT, for example, the colors of the unit patterns in the reference color pattern P2 may be all included in the colors of the unit patterns in the color code pattern P3.

With such a constitution, discrimination between colors in the color code patterns and correction of colors in images can be facilitated.

For example, a color-coded mark sticker may have the color-coded mark CT depicted thereon.

With such a constitution, the use of color-coded marks affixed to the measuring object allows easy at-a-glance identification of the marks, and can improve the efficiency of and promote the automation of three-dimensional measurement.

In a set of plural of the color-coded mark stickers, for example, the color-coded mark stickers may respectively have color code patterns P3 identical in shape and dimensions but all having different colors. Here, the phrase "all having different colors" means that in the case of comparing any two marks of the seal set, colors are different at least one unit pattern at the same position in the color code patterns.

With such a constitution, the use of a set of color-coded mark seals allows easy at-a-glance identification of the marks, and serves for the automation of three-dimensional measurement, even if a large number of color-coded marks CT are used.

For example, a color-coded mark extraction device may comprise the extraction section 41 for extracting the color-coded mark CT according to this invention from an image of the measuring object 1 including the color-coded mark CT; the identification code discrimination section 46 for discriminating an identification code of the color-coded mark CT based on the color code pattern P3 of the extracted color-coded mark CT; and the mark information storage section 150 for storing a position coordinate of the position detection pattern P1 of the extracted color-coded mark CT and the identification code discriminated by the identification code discrimination section 46 in association with each other.

With such a constitution, the color-coded mark extraction device that can discriminate codes of color-coded marks CT can be provided.

For example, a three-dimensional measurement device may comprise the photographing section (or a photographing device) 10 for photographing the measuring object 1 including the color-coded mark CT according; the extraction section 41 for extracting the color-coded mark CT from an image of the measuring object 1 photographed by the photographing section 10; the identification code discrimination section 46 for discriminating an identification code of the color-coded mark CT based on the position detection pattern P1 and the color code pattern P3 of the extracted color-coded mark CT; the mark information storage section 150 for storing a position coordinate of the position detection pattern P1 of the extracted color-coded mark CT and the identification code discriminated by the identification code discrimination section 48 in association with each other; and the three-dimensional poisition measurement section 50 for measuring a three-dimensional coordinate or a three-dimensional shape of the measuring object 1 based on positions of a large number of color-coded marks CT measured using the large number of color-coded marks CT.

With such a constitution, the three-dimensional measurement device that can advantageously improve the efficiency and enable the automation by discriminating and utilizing codes of color-coded marks CT can be provided.

This invention may be implemented as a computer-readable program which causes a computer to execute a three-dimensional measurement method according to this invention. The program may be stored in a built-in memory of the correlating section 40 or the display image forming section 50, stored in an internal or external storage device of the system, or downloaded via the Internet. This invention may also be implemented as a storage medium storing the program.

The embodiments of this invention have been described above. This invention is not limited to the embodiments described above, and various modifications can be apparently made to this invention without departing from the scope thereof. For example, different from the above embodiments in which stereo cameras are used to photograph a pair of images, a single camera may be used at slightly displaced positions to photograph a pair of images. In the above examples, relative orientation and a bundle method are used to determine orientation. However, these orientation techniques may be repeated alternately, or each orientation technique may be repeated, to increase the orientation accuracy. In the above examples, a cross-correlation factor method is used for stereo image matching. However, a sequential similarity detection algorithm or a least squares matching method may be used.

In the above embodiments, orientation is determined without measuring three-dimensional position data, and the three-dimensional coordinates of the measuring object are obtained through calculation. However, three-dimensional measurement may be performed before orientation so that the obtained data can be utilized to determine orientation. In this way, the order of the processes may be changed. In the above embodiments, the stereoscopic two-dimensional image forming section forms a stereoscopic two-dimensional image based on three-dimensional coordinate data, and the image correlating section correlates the three-dimensional coordinate data and a photographed image or a model image using orientation elements calculated by the orientation section. However, the function of the image correlating section may be integrated into the stereoscopic two-dimensional image forming section for processing integrally. Stereoscopic two-dimensional images for display may be wire-framed or texture-mapped for easy understanding. Color-coded marks may have various types of patterns. For example, reference patterns may have any pattern other than retro targets, such as a white inner circle with a black background, a black inner circle with a white background. Backgrounds may be various colors such as blue, red, yellow, etc. , and symbols may be various shapes such as a double circle, a "+" sign, a square, a star.

Further, unit patterns may be different from squares primarily described in relation to the color-coded marks in the above embodiments, and may be of any other shape such as bar-like patterns, circular patterns. The unit patterns may also be a color code, such as a barcode or the like combined with colors.

Instead of or in addition to affixing color-coded targets CT, a projection device may be used to project color-coded targets CT onto the measuring object. The structure of the color-code extraction means and the flowchart of the extraction of color-coded targets may be modified appropriately.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising", "having", "including" and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

[Industrial Applicability]

This invention is applicable to non-contact three-dimensional measurement of an object, and to a mark for use in such non-contact three-dimensional measurement of an object.

[Description of Reference Numerals and Symbols]

The main reference numerals and symbols are described as follows:

| 1: | measuring object |
|---|---|
| 10: | image photographing device |
| 12: | projection device |
| 13: | photographed image data storage section |
| 40: | correlating section |
| 41: | extraction section |
| 42: | reference point setting section |
| 43: | corresponding point search section |
| 44: | orientation section |
| 45: | corresponding point designating section |
| 46: | identification code discrimination section |
| 47: | arrangement section |
| 48: | photographed / model image display section |
| 48A: | model image forming section |
| 48B: | model image storage section |
| 49: | calculation processing section |
| 50: | display image forming section |
| 51: | three-dimensional coordinate data calculation section |
| 53: | three-dimensional coordinate data storage section |
| 54: | stereoscopic two-dimensional image forming section |
| 55: | stereoscopic two-dimensional image storage section |
| 56: | image correlating section |
| 57: | stereoscopic two-dimensional image display section |
| 58: | posture designating section |
| 59: | image conversion section |
| 60: | display device |
| 100, 100A: | three-dimensional measurement system |

| 110: | search processing section |
| 111: | retro target detection processing section |
| 120: | retro target grouping processing section |
| 130: | color-coded target detection processing section |
| 131: | color-coded target area / direction detection processing section |
| 140: | image / color pattern storage section |
| 141: | read image storage section |
| 142: | color-coded target correlation table |
| 150: | mark information storage section |
| 151: | three-dimensional position measurement section |
| 200: | retro target |
| 204: | inner circle portion |
| 206: | outer circle portion |
| 311: | color detection processing section |
| 312: | color correction section |
| 313: | verification processing section |
| 321: | coordinate transformation processing section |
| 322: | code conversion processing section |
| 491: | pattern detection section |
| 492: | pattern forming section |
| 493: | pattern projection section |
| 494: | color modification section |
| CT, CT1 to CT11: | color-coded target |
| EP: | epipolar line |
| I: | search range. |
| L12, L23, L31: | side |
| P1: | position detection pattern (retro target part) |
| P2: | reference color pattern (reference color part) |
| P3: | color code pattern (color coded part) |
| P4: | empty pattern (white part) |
| P5: | black area part |
| P6: | separation area part |
| P7: | template pattern |
| P8: | color retro target |
| R1 - R3: | center of gravity |
| RF: | reference point |
| T: | template image |
| To: | threshold |
| T1 - T3: | tentative label |

## Claims

1. A three-dimensional measurement system comprising:

an image data storage section for storing a pair of photographed images of a measuring object photographed from two directions such that the resulting images include a coded mark having in a surface thereof a position detection pattern for indicating a measurement position and a code pattern for allowing identification of the mark;

an extraction section for extracting the position detection pattern and the code pattern of the coded mark from the pair of photographed images;

an identification code discrimination section for discriminating an identification code of the coded mark based on the code pattern of the coded mark extracted by the extraction section;

a reference point setting section for setting a reference point of the coded mark based on the position detection pattern of the coded mark extracted by the extraction section on one of the pair of photographed images;

a corresponding point search section for searching the other of the pair of photographed images for a point corresponding to the reference point using the identification code discriminated by the identification code discrimination section based on the position detection pattern of the coded mark extracted by the extraction section; and

an orientation section for performing an orientation process on the pair of photographed images based on the reference point and the corresponding point.

2. The three-dimensional measurement system according to claim 1, wherein the code pattern is a color code pattern having plural colors, and the coded mark is a color-coded mark.

3. The three-dimensional measurement system according to claim 1 or claim 2, further comprising:

an arrangement section for determining, on a series of photographed images photographed by an image photographing device such that each photographed image includes at least three coded marks and adjacent photographed images share at least two coded marks, an arrangement of the series of photographed images such that the identification codes of the coded marks shared by the adjacent photographed images coincide with each other.

4. The three-dimensional measurement system according to claim 3, wherein the orientation section performs sequential orientations on the series of photographed images of the measuring object such that coordinates of the reference points or the corresponding points of the coded marks shared by the adjacent photographed images coincide with each other.

5. The three-dimensional measurement system according to any one of claim 1 to claim 4, further comprising:

a mark information storage section for storing a position coordinate of the extracted position detection pattern of the coded mark and the identification code discriminated by the identification code discrimination section in association with each other.

6. A three-dimensional measurement method comprising the steps of:

photographing a measuring obj ect from two directions such that resulting images include a coded mark having in a surface thereof a position detection pattern for indicating a measurement position and a code pattern for allowing identification of the mark;
storing a pair of images of the measuring object photographed in the photographing step;
extracting the position detection pattern and the code pattern of the coded mark from the pair of photographed images;
discriminating an identification code of the coded mark based on the code pattern of the coded mark extracted in the extracting step;
setting a reference point of the coded mark based on the position detection pattern of the coded mark extracted in the extracting step on one of the pair of photographed images;
searching the other of the pair of photographed images for a point corresponding to the reference point using the identification code discriminated in the discriminating step based on the position detection pattern of the coded mark extracted in the extracting step; and
performing an orientation process on the pair of photographed images based on the reference point and the corresponding point.

7. The three-dimensional measurement method according to claim 6, wherein the coded mark is a color-coded mark,and the code pattern is a color code pattern having plural colors.

8. A color-coded mark comprising in a surface thereof:

a position detection pattern for indicating a measurement position, and a color code pattern having plural colors for allowing identification of the mark and located in a predetermined position relative to the position detection pattern.

9. The color-coded mark according to claim 8, further comprising in a surface thereof:

a reference color pattern having plural colors to be used as color references.

10. The color-coded mark according to claim 8 or claim 9, wherein the position detection pattern is located at three corners of a quadrangle.

P1:RETRO TARGET PART (TARGET DETECTION, CENTER OF GRAVITY DETECTION, ORIENTATION DETECTION, CODE AREA DETECTION)

P2:REFERENCE COLOR PART
(BLUE PATTERN)

P2: REFERENCE COLOR PART
(RED PATTERN)

P2: REFERENCE COLOR PART
(GREEN PATTERN)

*FIG.1A*

CT1

P4: WHITE PART (ORIENTATION DETECTION, COLOR CALIBRATION)

P3: COLOR CODE PART

P1: RETRO TARGET PART (TARGET DETECTION, CENTER OF GRAVITY DETECTION, ORIENTATION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

*FIG.1B*

CT2

P4: WHITE PART (ORIENTATION DETECTION, COLOR CALIBRATION)

P3: COLOR CODE PART

P1: RETRO TARGET PART (TARGET DETECTION, CENTER OF GRAVITY DETECTION, ORIENTATION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

*FIG.1C*

CT3

P3: COLOR CODE PART
(9 PARTS)

P4: WHITE PART (ORIENTATION DETECTION, COLOR CALIBRATION)

## FIG. 2

100

IMAGE PHOTOGRAPHING DEVICE 〜10

40

CORRELATING SECTION

PHOTOGRAPHED IMAGE DATA STORAGE SECTION 〜13

MODEL IMAGE STORAGE SECTION 〜48B

41

EXTRACTION SECTION

IDENTIFICATION CODE DISCRIMINATION SECTION 〜46

ARRANGEMENT SECTION 〜47

42

REFERENCE POINT SETTING SECTION

43

CORRESPONDING POINT SEARCH SECTION

ORIENTATION SECTION 〜44

45

CORRESPONDING POINT DESIGNATING SECTION

48A

48

PHOTOGRAPHED / MODEL IMAGE DISPLAY SECTION

MODEL IMAGE FORMING SECTION

51

50

THREE-DIMENSIONAL COORDINATE DATA CALCULATION SECTION

54

STEREOSCOPIC TWO-DIMENSIONAL IMAGE FORMING SECTION

55

STEREOSCOPIC TWO-DIMENSIONAL IMAGE STORAGE SECTION

53

THREE-DIMENSIONAL COORDINATE DATA STORAGE SECTION

56

IMAGE CORRELATING SECTION

59

IMAGE CONVERSION SECTION

POSTURE DESIGNATING SECTION 〜58

60

57

STEREOSCOPIC TWO-DIMENSIONAL IMAGE DISPLAY SECTION

DISPLAY IMAGE FORMING SECTION

EP 1 750 090 A2

# *FIG. 3*

IMAGE PHOTOGRAPHING DEVICE ~10

IMAGE DATA STORAGE SECTION ~13

COLOR IMAGE | 41 | ~105

COLOR CODE EXTRACTION MEANS

EXTRACTION SECTION ~130

~110

SEARCH PROCESSING SECTION 111

RETRO TARGET DETECTION PROCESSING SECTION

COLOR-CODED TARGET DETECTION PROCESSING SECTION

131 | COLOR-CODED TARGET AREA / DIRECTION DETECTION PROCESSING SECTION

COLOR DETECTION PROCESSING SECTION ~311

COLOR CORRECTION SECTION ~312

VERIFICATION PROCESSING SECTION ~313

120

RETRO TARGET GROUPING PROCESSING SECTION

~140

IMAGE / COLOR PATTERN STORAGE SECTION

READ IMAGE STORAGE SECTION ~141

COLOR-CODED TARGET CORRELATION TABLE ~142

IDENTIFICATION CODE DISCRIMINATION SECTION ~46

COORDINATE TRANSFORMATION PROCESSING SECTION 321

CODE CONVERSION PROCESSING SECTION 322

COORDINATE, CODE VALUE

MARK INFORMATION STORAGE SECTION ~150

ORIENTATION SECTION ~44

THREE-DIMENSIONAL POSITION MEASUREMENT SECTION ~151

# FIG. 4

START

AFFIX COLOR-CODED TARGETS — S01

PHOTOGRAPH — S10

REGISTER IMAGES — S11

EXTRACT CODED TARGETS — S14

DISCRIMINATE IDENTIFICATION CODE — S15

SET STEREO PAIR — S16

SET REFERENCE POINT IN REFERENCE IMAGE CONSTITUTING STEREO IMAGE — S18

DETERMINE CORRESPONDING POINT IN SEARCH IMAGE CONSTITUTING STEREO IMAGE — S19

} S30

ORIENTATION CALCULATION PROCESS — S40

CREATE MODEL IMAGE OF MEASURING OBJECT — S42

STORE MODEL IMAGE — S43

DISPLAY MODEL IMAGE ON SCREEN — S44

DESIGNATE MEASUREMENT POSITIONS (DETERMINE MATCHING AREA) — S45

STEREO MEASUREMENT — S50

CALCULATION PROCESS — S55

EXIT

*FIG.5A*

*FIG.5B*

## FIG.6A

OVERLAPPING PORTION    TWO IMAGES

P1

CT

## FIG.6B

FOR BREAK LINE

P1

CODED →
TARGET CT

# FIG. 7

| IMAGE DATA READING PROCESS | S500 |

| RETRO TARGET EXTRACTION PROCESS | S510 |

| RETRO TARGET GROUPING PROCESS | S520 |

| COLOR-CODED TARGET AREA / DIRECTION DETECTION PROCESS | S530 |

SAME GROUP? — NO

YES

| CODE IDENTIFICATION | S535 |

| CODE CONVERSION PROCESS | S540 |

| REGISTER CODE OF TARGET FOR EACH IMAGE | S545 |

FIG.8A1

FIG.8A2

FIG.8B1

FIG.8B2

200

204
(BRIGHT)

206(DARK)

204(BRIGHT)

206(DARK)

BRIGHTNESS

To
THRESHOLD

BRIGHTNESS

To

DISTANCE : X

EP 1 750 090 A2

# FIG. 9

FORM TRIANGLE USING CENTERS OF GRAVITY OF THREE RETRO TARGETS AS ITS VERTEXES — ③  ～S600

ONE OF CENTERS OF GRAVITY OF RETRO TARGETS IS SELECTED AND LABELED AS T1  ～S610

REMAINING TWO CENTERS OF GRAVITY ARE LABELED AS T2 AND T3 CLOCKWISE  ～S612

SIDE CONNECTING T1 AND T2 IS LABELED AS L12, SIDE CONNECTING T2 AND T3 AS L23, AND SIDE CONNECTING T3 AND T1 AS L31  ～S614

WHEN VICINITY OF CENTER OF GRAVITY T1 IS SCANNED CLOCKWISE FROM L12 TO L31, ANY CHANGE IN COLOR? — NO  ～S620
↓ YES

S621 — YES
WHEN VICINITY OF CENTER OF GRAVITY T2 IS SCANNED CLOCKWISE FROM L23 TO L12, ANY CHANGE IN COLOR?
↓ NO

S623 — YES
WHEN VICINITY OF CENTER OF GRAVITY T3 IS SCANNED CLOCKWISE FROM L31 TO L23, ANY CHANGE IN COLOR?
↓ NO

CENTER OF GRAVITY T1 IS LABELED AS R1, T2 AS R2 AND T3 AS R3  ～S630

WHEN VICINITY OF CENTER OF GRAVITY T2 IS SCANNED CLOCKWISE FROM L23 TO L12, ANY CHANGE IN COLOR? — NO  S622
↓ YES  S624

WHEN VICINITY OF CENTER OF GRAVITY T3 IS SCANNED CLOCKWISE FROM L31 TO L23, ANY CHANGE IN COLOR?
YES ↓ NO

CENTER OF GRAVITY T2 IS LABELED AS R1, T3 AS R2 AND T1 AS R3  S631

② ① ④

# FIG. 10

(1)　　　　(4)　　　　(2)

WHEN VICINITY OF CENTER OF GRAVITY T3 IS SCANNED CLOCKWISE FROM L31 TO L23, ANY CHANGE IN COLOR ?　NO → S625

YES

CENTER OF GRAVITY T3 IS LABELED AS R1, T1 AS R2 AND T2 AS R3 —S632

S640

PERFORM COORDINATE TRANSFORMATION USING R1, R2 AND R3 TO OBTAIN DISTORTION-FREE VIEW

S650

ARE WHITE PARTS LOCATED AS DESIGN VALUE?　NO →

YES

COLOR-CODED TARGETS ARE SUCCESSFULLY DETECTED —S655

REFERENCE COLOR PARTS ARE DETECTED —S660

COLOR CODE PARTS ARE DETECTED —S670

COLOR CODES ARE CONVERTED INTO CODES BASED ON DETECTED REFERENCE COLOR PARTS AND COLOR CODE PARTS TO DETERMINE CODES OF CODED TARGETS —S680

S633

GROUPING ERROR OF RETRO TARGETS

THREE NEW RETRO TARGETS ARE SELECTED — S634

(3)

## FIG. 11A

## FIG. 11B

*FIG. 12A*

*FIG. 12B*

*FIG. 12C*

# FIG. 13

SELECTION OF STEREO PAIRS

S550

LIST NUMBERS OF IMAGES

S560

DETERMINE STEREO PAIRS FROM IMAGES INCLUDING PLURALITY OF COMMON CODES

S570

DETERMINE ARRANGEMENT OF STEREO PAIRS

## FIG. 14

## FIG. 15A

DETERMINE CORRESPONDING POINTS — S200

MODE SELECTION (MANUAL, SEMI-AUTOMATIC OR AUTOMATIC) — S202

(A)                                                    (B)

SEMI-AUTOMATIC MODE — S220

ENTER AUTOMATIC SEARCH MODE — S222

DESIGNATE CHARACTERISTIC POINT ON LEFT IMAGE — S224

. SEARCH FOR CHARACTERISTIC POINT ON RIGHT IMAGE — S226

IS SEARCH ON RIGHT IMAGE OK?    NO    S230

S228   S210   YES

IS ANOTHER POINT ALSO OK?    YES

MANUAL MODE    NO

DESIGNATE POINT ON RIGHT IMAGE — S232

S212

DESIGNATE CHARACTERISTIC POINT ON LEFT IMAGE

S214

DESIGNATE SAME CHARACTERISTIC POINT ON RIGHT IMAGE

S216

HAVE SIX OR MORE POINTS BEEN DESIGNATED?

NO    YES

READ COORDINATE OF POINT — S234

S236

HAVE SIX OR MORE POINTS BEEN DESIGNATED?

NO    YES    (C)

RETURN

# FIG. 15B

Ⓑ

S240 — AUTOMATIC MODE

S242

S244

NO ⟋ SIX OR MORE TARGETS ON LEFT AND RIGHT IMAGES?

TO MANUAL MODE OR SEMI-AUTOMATIC MODE

S246 — | YES

PROCESS FOR AUTOMATIC MODE

Ⓐ

S248 — REGISTER TEMPLATE IMAGE

S250 — SEARCH FOR TARGET POSITION

S252 — DISPLAY POSITION WHERE TARGET IS DETECTED

YES ⟋ OK?

S254 — | NO

S256 — CORRECTION

S258 — DETECT CORRESPONDING POINTS

Ⓒ

## FIG. 16

# FIG. 17

AUTOMATIC CORRELATION OF REFERENCE POINTS THROUGH ORIENTATION

S110

| MEASURE POSITIONS OF POSITION DETECTION PATTERNS |

S120

| ORIENTATION (AT TOTAL OF SIX OR MORE POINTS) |

S130

| CREATE RECTIFIED IMAGE (CREATE CONVERTED IMAGE) |

S140

| DETECT TARGETS ON (AROUND) EPIPOLAR LINE |

S150

| CORRELATION BETWEEN LEFT AND RIGHT IMAGES |

S160

| ORIENTATION |

S170

IS ACCURACY OK?  —— YES ——  ( EXIT )

NO ↓  S180

| REMOVE WORSENING POINT |

# FIG. 18A

CT · COLOR-CODED TARGET

RF   REFERENCE POINT

# FIG. 18B

CT

RF

LEFT IMAGE

RIGHT IMAGE

EP   EPIPOLAR LINE

## FIG. 19

M1

N1

M1 — N1

T ¦ LEFT IMAGE

TEMPLATE IMAGE

I

T

I

RIGHT IMAGE

# FIG 20

S300

| DETECT CODED TARGETS |
| --- |

S310

| DETECT POSITION DETECTION PATTERNS<br>(RETRO TARGET PARTS) |
| --- |

S320

| DETERMINE MEASUREMENT RANGE (STEREO MATCHING AREA)<br>BASED ON CALCULATED COORDINATES OF POSITION<br>DETECTION PATTERNS |
| --- |

# FIG. 21A

COORDINATE OF
UPPER LEFT POINT
(X,Y)=(0,0)

P 1

LINE CONNECTING POINTS
WITH SMALLEST
Y-COORDINATE

CODED TARGET
CT →

LINE CONNECTING POINTS
WITH LARGEST
X-COORDINATE

LINE CONNECTING POINTS
WITH SMALLEST
X-COORDINATE

LINE CONNECTING POINTS
WITH LARGEST
Y-COORDINATE

# FIG. 21B

C T

P 1

## FIG. 22A

(MEASUREMENT POSITION DESIGNATION) — S400

MODE SELECTION (MANUAL OR SEMI-AUTOMATIC OR AUTOMATIC) — S402

(B)

S410
MANUAL MEASUREMENT MODE

S412
DESIGNATE CHARACTERISTIC POINT ON LEFT IMAGE

S414
DESIGNATE SAME CHARACTERISTIC POINT ON RIGHT IMAGE

S416
OK? — YES / NO

S418
DESIGNATE POSITION OF POINT DESIRED TO BE MEASURED

S420
DESIGNATE AND ESTABLISH DEPTH DIRECTION

S422
ESTABLISH MEASUREMENT POSITION

SEMI-AUTOMATIC STEREOSCOPIC MEASUREMENT MODE — S430

ENTER AUTOMATIC SEARCH MODE — S432

DESIGNATE CHARACTERISTIC POINT ON LEFT IMAGE — S434

SEARCH FOR CHARACTERISTIC POINT ON RIGHT IMAGE — S436

IS SEARCH ON RIGHT IMAGE OK? — YES / NO — S438

DESIGNATE POSITION OF POINT DESIRED TO BE MEASURED — S440

DESIGNATE AND ESTABLISH DEPTH DIRECTION — S442

ESTABLISH MEASUREMENT POSITION — S444

(C)

RETURN

# FIG. 22B

(B)

S450 — AUTOMATIC MEASUREMENT MODE

S452 — MEASUREMENT AREA DESIGNATING PROCESS

S454 — IS DESIGNATED POINT OF MEASUREMENT AREA OK? — NO

YES

S456 — CONNECT AND DISPLAY POINTS

S458 — IS MEASUREMENT AREA OK? — NO

YES

S460 — CLEAR POINTS

S462 — ESTABLISH MEASUREMENT POSITION

S464 — AUTOMATIC CORRESPONDING POINT DETECTION

(C)

# FIG. 23

EP 1 750 090 A2

## FIG.24 A

10 STEREO CAMERA

12 PROJECTOR

49 CALCULATION PROCESSING SECTION

PATTERN DETECTION SECTION — 491

PATTERN FORMING SECTION — 492

PATTERN PROJECTION SECTION — 493

COLOR MODIFICATION SECTION — 494

## FIG. 24B

## FIG. 24C

## FIG. 25

P8

CT12

# FIG. 26

P1 : RETRO TARGET PART (TARGET DETECTION, CENTER OF GRAVITY DETECTION, DIRECTION DETECTION, CODE AREA DETECTION)

P2 : REFERENCE COLOR PART (BLUE PATTERN)

P2 : REFERENCE COLOR PART (RED PATTERN)

P2 : REFERENCE COLOR PART (GREEN PATTERN)

CT4

P5 : BLACK AREA PART

P4 : WHITE PART (DIRECTION DETECTION, COLOR CALIBRATION)

P3 : COLOR CODE PART

# FIG. 27

P1: RETRO TARGET PART (TARGET DETECTION, CENTER OF GRAVITY DETECTION, DIRECTION DETECTION, CODE AREA DETECTION)

← CT5

P4: WHITE PART (DIRECTION DETECTION, COLOR CALIBRATION)

P3: COLOR CODE

# FIG. 28

P1 : RETRO TARGET PART (TARGET DETECTION, CENTER OF GRAVITY DETECTION, DIRECTION DETECTION, CODE AREA DETECTION)

P3 : COLOR CODE PART

P2 : REFERENCE COLOR PART (RED PATTERN)

CT6

P2 : REFERENCE COLOR PART (GREEN PATTERN)

P2 : REFERENCE COLOR PART (BLUE PATTERN)

# FIG 29

P1 : RETRO TARGET PART (TARGET DETECTION, CENTER OF GRAVITY DETECTION, DIRECTION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

CT7

P3: COLOR CODE PART (4 PARTS)

P4: WHITE PART (DIRECTION DETECTION, COLOR CALIBRATION)

# FIG. 30

P1 : RETRO TARGET PART (TARGET DETECTION, CENTER OF GRAVITY DETECTION, DIRECTION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

CT8

P3: COLOR CODE PART (5 PARTS)

# FIG. 31

P1: RETRO TARGET PART (TARGET DETECTION, CENTER OF GRAVITY DETECTION, DIRECTION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

CT9

P6: SEPARATION AREA PART

P4: WHITE PART (DIRECTION DETECTION, COLOR CALIBRATION)

P3: COLOR CODE PART

# FIG. 32

P7: TEMPLATE PATTERN PART (TARGET DETECTION, CENTER OF GRAVITY DETECTION, DIRECTION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

CT10

P4: WHITE PART (DIRECTION DETECTION, COLOR CALIBRATION)

P3: COLOR CODE PART

# FIG. 33

P8: COLOR RETRO TARGET PART (TARGET DETECTION, CENTER OF GRAVITY DETECTION, DIRECTION DETECTION, CODE AREA DETECTION)

P2: REFERENCE COLOR PART (BLUE PATTERN)

P2: REFERENCE COLOR PART (RED PATTERN)

P2: REFERENCE COLOR PART (GREEN PATTERN)

CT11

P4: WHITE PART (DIRECTION DETECTION, COLOR CALIBRATION)

P3: COLOR CODE PART

**REFERENCES CITED IN THE DESCRIPTION**

**Patent documents cited in the description**

- JP 2005223490 A
- JP 2005224771 A
- JP 2005289334 A